# EUROPEAN PATENT SPECIFICATION

(11) **EP 3 345 071 B1**
(45) Date of publication and mention of the grant of the patent: **15.07.2020**
(21) Application number: 16842419.0
(22) Date of filing: 01.09.2016
(51) Int. Cl.: H04L 29/06, G06F 3/00, H04W 4/02, H04W 48/04, H04B 7/185, G06F 16/16, H04W 4/18, H04W 4/38

(54) **SMART DOWNLOADING OF SENSING DATA IN REMOTE SENSING SYSTEMS**
INTELLIGENTES HERUNTERLADEN VON MESSDATEN IN FERNMESSSYSTEMEN
TÉLÉCHARGEMENT INTELLIGENT DE DONNÉES DE DÉTECTION DANS DES SYSTÈMES DE DÉTECTION À DISTANCE

(30) Priority: 04.09.2015 US 201562214351 P
(43) Date of publication of application: 11.07.2018
(73) Proprietor: Spacemetric AB, 91 61 Sollentuna (SE)
(72) Inventor: EDGARDH, Lars-Åke, SE-186 95 Vallentuna (SE); WESTIN, Torbjörn, SE-170 77 Solna (SE); VINTERHAV, Emil, SE-112 41 Stockholm (SE); ANDERSSON, Mikael, SE-175 47 Järfälla (SE); SKABORN, Daniel, SE-756 52 Uppsala (SE)
(74) Representative: Aros Patent AB
(86) International application number: PCT/SE2016/050822
(87) International publication number: WO 2017/039520

(56) References cited:
- WO-A1-2014/107392
- CN-A- 102 708 156
- CN-U- 201 575 809
- US-A- 4 405 943
- US-A- 5 859 788
- US-A- 5 883 584
- US-A1- 2007 143 277
- US-A1- 2007 244 984

## Description

### TECHNICAL FIELD

The invention generally relates to remote sensing systems, and more particularly to the downlinking and processing of remote sensing data in systems characterized by a limited data bandwidth in the link between sensor and user.

### BACKGROUND

The collection of remote sensing data often relies on an architecture where the remote sensing data collection and the data processing and archiving are performed at different locations. As the amount of data collected by the individual sensors continues to grow, the system for retrieving, processing, archiving and distributing data needs to grow with it. A limiting factor is the ability to handle the large flow of data from the sensor to the processing and archive location. The data flow becomes a bottleneck when growing the system.

Examples of remote sensing systems include, but is not limited to, satellite-based remote sensing systems, remote sensing performed by Unmanned Aerial Vehicles (UAVs), remote sensing in Autonomous Underwater Vehicles (AUVs) as well as many other types of remote sensing systems.

Examples of sensing data, also referred to as sensor data, include but is not limited to image data from Earth Observations (EO) and/or Astronomical Observations (AO), image data obtained from aerial photos, underwater photos and other types of photometric data, as well as other types of sensing data from other types of sensors.

US 2013/0318214 relates to a data transfer system for an unmanned vehicle on a mission. The data transfer system can include a first sensor associated with the unmanned vehicle for collecting a first data set, and a second sensor associated with the unmanned vehicle and for collecting a second data set, wherein the second data set is associated with the first data set by a predetermined association.

US Patent 7,246,040 relates to the processing of remote sensing data, especially remote sensing data recorded by a satellite. A defined requirement on the use of the remote sensing data is entered by the use of an interface. In a linker, the defined requirement is used to select a certain number of processing routines and to link them together, so that the selected processing routines can process the remote sensing data in such a way that the defined requirement is fulfilled.

US 2013/0050486 relates to a system and method for transmitting still images and a video feed from an unmanned aerial vehicle to a ground station.

US 2005/0136917 relates to an apparatus and method for managing and coordinating the delivery of information content in a manner that makes efficient use of the bandwidth of satellite based transponders being used to relay the information content to the mobile platforms. The apparatus makes use of a content management coordinator system having a graphical user interface (GUI). The GUI interfaces with one or more mobile platform operators to allow each of the operators to define the criteria by which various types of information content to be supplied to the mobile platforms. The apparatus further includes a file spaced storage monitoring subsystem which allows the file storage space available on each mobile platform to be monitored, and files deleted therefrom if necessary, to ensure that newly requested information content can be stored by the mobile platform. Information content is coordinated and aggregated as needed to ensure that transponder bandwidth is used most effectively for delivering various types of information content to each mobile platform requesting the content within each coverage region being controlled by the apparatus.

US Patent 5,883,584 relates to a system in which two sensors are carried on board a spacecraft: a first low resolution "preview" sensor, and a second high resolution "fine sensor", the latter having sensing parameters which can be adjusted to satisfy the needs of a particular customer. The instantaneous field of view of the preview sensor is located at a fixed distance ahead of that of the fine sensor, so that within a predetermined time period, users may decide which partial data are to be transmitted by the fine sensor and under which observation parameters (such as spatial resolution, spectral channels, measuring site, size of the measured area) to their earth station in near real time, still within the course of the actual overflight. Compilation of the specific data requested by the customers takes place on-board the spacecraft upon telecommands by the customers themselves. Sensing of the data requested by the customer is then performed by the fine sensor.

US Patent 7,130,805 relates to a decision support system that includes highly adaptive sensors, transport, and models to enable time critical decision making. The decision support model of the system is progressive so that not all input parameters need to be available to produce model prediction output. Input parameters of the model with the largest first order derivative values are given highest priority in data acquisition and transmission. The parameters acquired at the sensors are stored in progressive data representation formats, which later on are progressively transmitted to the decision support server.

The article Hardware And Software Consideration To Use Near Real Time Msg-Seviri And Noaa-Avhrr Images by Abdelatif Hassini, Ahmed Hafid Belbachir, Programming and Systems (ISPS), 2013 11th International Symposium, pages 12 - 16, 24 April 2013 relates to a SEVIRI (Spinning Enhanced Visible and Infrared Imager) sensor on the MSG-2 satellite. The sensor provides an image every 15 minutes, so the development of a system that can exploit the temporal behavior of the observations of terrestrial half-disc, is crucial for these near-real-time applications. A terrestrial station is required to collect and follow the temporal, spectral, and space evolution. WO 2014/107392 relates to a standard telecom system that enables push-to-talk or push-to-share services for mobile devices. The system allows transmission of previews of media objects that are shared in a group communication, such as a push-to-talk or push-to-share communication session. Media objects can be stored at a media server and/or an originating communicating device. A plurality of previews for the media object can be selected and/or generated by the originating device and transmitted during a PTT session.

### SUMMARY

The present invention overcomes these and other drawbacks of the prior art.

It is a general object to provide improved performance of remote sensing systems by utilizing the data management infrastructure more efficiently.

In particular it is desirable to reduce the amount of data that needs to be retrieved and downloaded from the remote sensor.

It is a specific object to provide a method and a corresponding system for managing sensor data collected and registered by a remote sensing system at a remote field location, referred to as a field segment, and downlinking sensor data to a separate location, referred to as a home segment.

It is another object to provide a method and corresponding system for requesting sensor data from a remote sensing system at a remote field location, the field segment, to a separate location, the home segment.

It is an object to provide an electronic circuit configured to manage sensor data.

Yet another object is to provide an electronic circuit configured to request sensor data.

It is also an object to provide a computer program for managing, when executed by a processor, sensor data collected and registered by a remote sensing system at a remote field location, the field segment, and enabling downlinking of sensor data to a separate location, the home segment.

Yet another object is to provide a computer program for requesting, when executed by a processor, sensor data from a remote sensing system at a remote field location, the field segment, to a separate location, the home segment.

Still another object is to provide a corresponding computer program product. The invention is defined by the independent claims 1, 2, 9, 10, 12, 13, 14, 15. A basic idea is to store and preprocess data close to the sensor and thereby to enable controlled and reactive prioritization of data for download at the right time.

According to a first aspect, there is provided a method for managing sensor data collected and registered by a remote sensing system at a remote field location, referred to as the field segment, and downlinking sensor data to a separate location, referred to as the home segment. The method comprises the steps of:
- formatting and storing sensor data in data blocks in a field data archive together with associated metadata describing the collected sensor data, wherein each data block has a corresponding data block identifier in the field data archive;
- generating a sensor data product for preview, referred to as an overview, from the sensor data stored in data blocks in the field data archive, wherein the generated overview is a data product with lower data density than the original sensor data;
- downlinking the overview together with corresponding data block identifiers and associated metadata to the home segment to enable a ground-based process where data blocks, representing a selected subset of sensor data, are selected for transfer based on the content of the overview and/or the associated metadata;
- receiving command(s) from the home segment requesting transfer of selected data blocks by their data block identifiers to the home segment; and
- transferring the selected data blocks to the home segment for storage in a home data archive to enable delivery of a sensor data product to end-users.

According to a second aspect, there is provided a method for requesting sensor data from a remote sensing system at a remote field location, referred to as the field segment, to a separate location, referred to as the home segment. The method comprises the steps of:
- receiving a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment, and wherein the overview has lower data density than the original sensor data;
- generating command(s) requesting transfer of selected data blocks by their data block identifiers from the field segment to the home segment, wherein the selected data blocks represent a selected subset of sensor data;

- sending the command(s) from the home segment to the field segment; and
- receiving the selected data blocks from the field segment for storage in a home data archive to enable delivery of a sensor data product to end-users.

According to a third aspect, there is provided a system for managing sensor data collected and registered by a remote sensing system at a remote field location, referred to as the field segment, and downlinking sensor data to a separate location, referred to as the home segment. The system is configured to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- downlink the overview together with corresponding data block identifiers and associated metadata to the home segment to enable a ground-based process where data blocks, representing a selected subset of sensor data, are selected for transfer based on the content of the overview and/or associated metadata;
- receive command(s) from the home segment requesting transfer of selected data blocks by their data block identifiers to the home segment; and
- transfer the selected data blocks to the home segment for storage in a home data archive to enable delivery of a sensor data product to end-users.

According to a fourth aspect, there is provided a system for requesting sensor data from a remote sensing system at a remote field location, referred to as the field segment, to a separate location, referred to as the home segment. The system is configured to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the home segment, wherein the selected data blocks represent a selected subset of sensor data;
- send the command(s) from the home segment to the field segment; and
- receive the selected data blocks from the field segment for storage in a home data archive to enable delivery of a sensor data product to end-users.

According to a fifth aspect, there is provided an electronic circuit configured to manage sensor data collected and registered by a remote sensing system at a remote field location, referred to as a field segment, and enabling downlinking of sensor data to a separate location, referred to as a home segment. The electronic circuit is configured to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- enable downlinking of the overview together with corresponding data block identifiers and associated metadata to the home segment to enable a ground-based process where data blocks, representing a selected subset of sensor data, are selected for transfer based on the content of the overview and/or associated metadata;
- receive command(s) from the home segment requesting transfer of selected data blocks by their data block identifiers to the home segment; and
- enable transfer of the selected data blocks to the home segment for storage in a home data archive to enable delivery of a sensor data product to end-users.

According to a sixth aspect, there is provided an electronic circuit configured to request sensor data from a remote sensing system at a remote field location, referred to as a field segment, to a separate location, referred to as a home segment. The electronic circuit is configured to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the home segment, wherein the selected data blocks represent a selected subset of sensor data;
- enable transfer of the command(s) from the home segment to the field segment; and
- receive the selected data blocks from the field segment for storage in a home data archive to enable delivery of a sensor data product to end-users.

According to a seventh aspect, there is provided a computer program for managing, when executed by a processor, sensor data collected and registered by a remote sensing system at a remote field location, referred to as the field segment, and enabling downlinking of sensor data to a separate location, referred to as the home segment. The computer program comprises instructions, which when executed by the processor, cause the processor(s) to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- enable downlinking of the overview together with corresponding data block identifiers and associated metadata to the home segment to enable a ground-based process where data blocks, representing a selected subset of sensor data, are selected for transfer based on the content of the overview and/or associated metadata;

- receive command(s) from the home segment requesting transfer of selected data blocks by their data block identifiers to the home segment; and
- enable transfer of the selected data blocks to the home segment for storage in a home data archive to enable delivery of a sensor data product to end-users.

According to an eighth aspect, there is provided a computer program for requesting, when executed by a processor, sensor data from a remote sensing system at a remote field location, referred to as the field segment, to a separate location, referred to as the home segment. The computer program comprises instructions, which when executed by the processor, cause the processor(s) to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the home segment, wherein the selected data blocks represent a selected subset of sensor data;
- enable transfer of the command(s) from the home segment to the field segment; and
- receive the selected data blocks from the field segment for storage in a home data archive to enable delivery of a sensor data product to end-users.

According to a ninth aspect, there is provided a computer-program product comprising a computer-readable medium having stored thereon such a computer program.

Basically, the invention offers at least one of the following advantages:
- The invention reduces the amount of data that the data management system of a remote sensing system has to retrieve from a sensor in a field location to a separate location where data is collected meaning that requirements for data bandwidth for downlink and processing as well as the size of data archive can be relaxed or lightened.
- The invention allows data to be selected for download/downlink from the sensor based on an overview of the data available and/or associated metadata.
- The invention allows for data to be downloaded on demand when the need arises.

The invention is particularly useful in the following technical applications:
- In satellite based remote sensing systems where limited data downlink and processing capacity and legislative requirements for storage of the complete set of downloaded data can be cost drivers, the invention can reduce the amount of data that needs to be downloaded and handled on ground.
- In remote sensing systems where some data is more urgently needed than other and where the data downlink is a bottleneck for retrieving the data, the invention enables prioritization of the order in which the data is retrieved from the sensing platform.

Other advantages of the invention will be appreciated when reading the below detailed description.

### BRIEF DESCRIPTION OF THE DRAWINGS

The invention, together with further objects and advantages thereof, may best be understood by making reference to the following description taken together with the accompanying drawings, in which:
FIG. 1 is a schematic diagram illustrating an example of a functional architecture and an associated flow of data in a traditional remote sensing system architecture.
FIG. 2 is a schematic diagram illustrating an example of a first aspect or part of a flow of a data retrieval process in an architecture embodying the invention.
FIG. 3 is a schematic diagram illustrating an example of a second aspect or part of a flow of a data retrieval process in an architecture embodying the invention.
FIG. 4 is a schematic diagram illustrating an example of a functional architecture embodying the invention on a system level including interfaces.

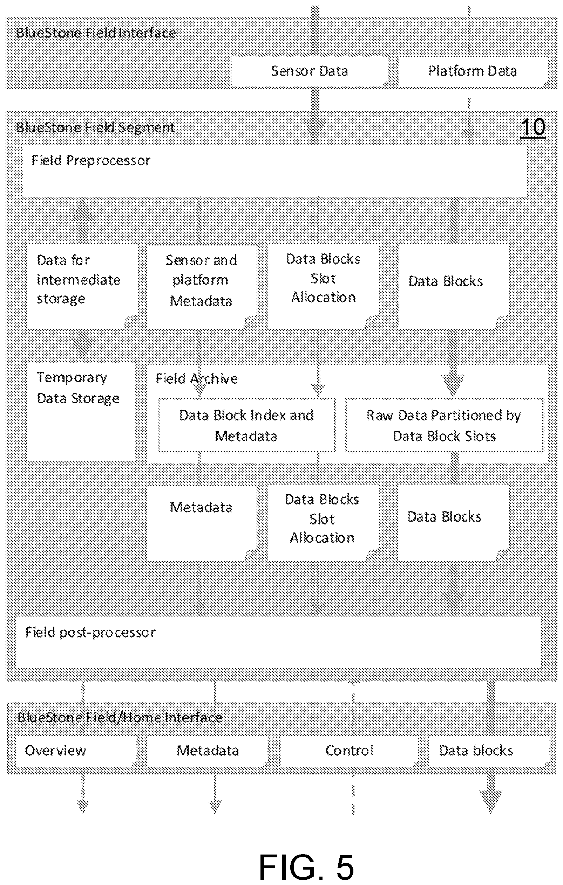

FIG. 5 is a schematic diagram illustrating an example of functional blocks embodying the field segment of the invention.

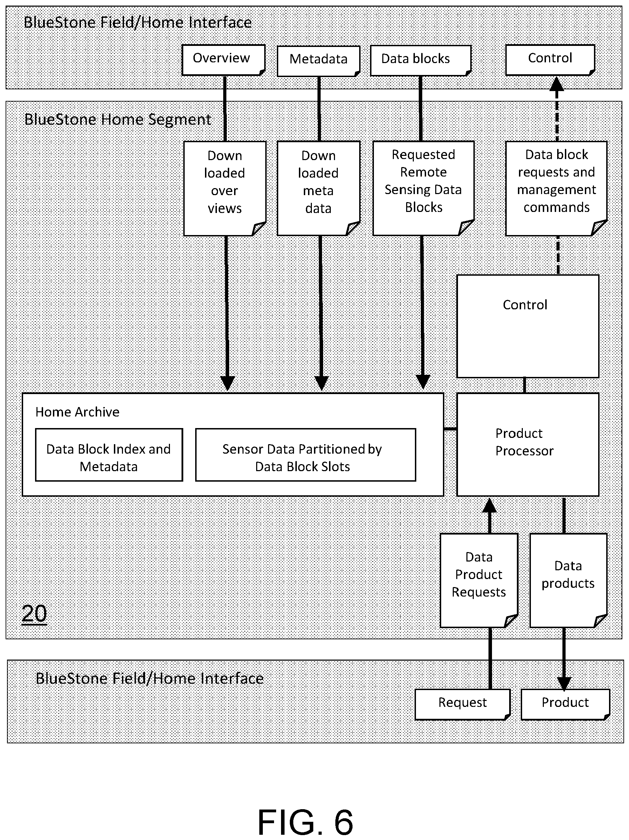

FIG. 6 is a schematic diagram illustrating an example of functional blocks embodying the home segment of the invention.
FIG. 7 is a schematic diagram illustrating an example of a distributed Home Segment or part of a flow of a data retrieval process in an architecture embodying the invention.
FIG. 8 is a schematic diagram illustrating an example of a computer-implementation according to an embodiment.
FIG. 9 is a schematic flow diagram illustrating an example of a method for managing sensor data collected and registered by a remote sensing system at a remote field location, referred to as the field segment, and downlinking sensor data to a separate location, referred to as the home segment.
FIG. 10 is a schematic flow diagram illustrating an example of a method for requesting sensor data from a remote sensing system at a remote field location, referred to as the field segment, to a separate location, referred to as the home segment.

### DETAILED DESCRIPTION

For a better understanding of the present invention it may be useful to begin with a brief overview of a traditional remote sensing system.

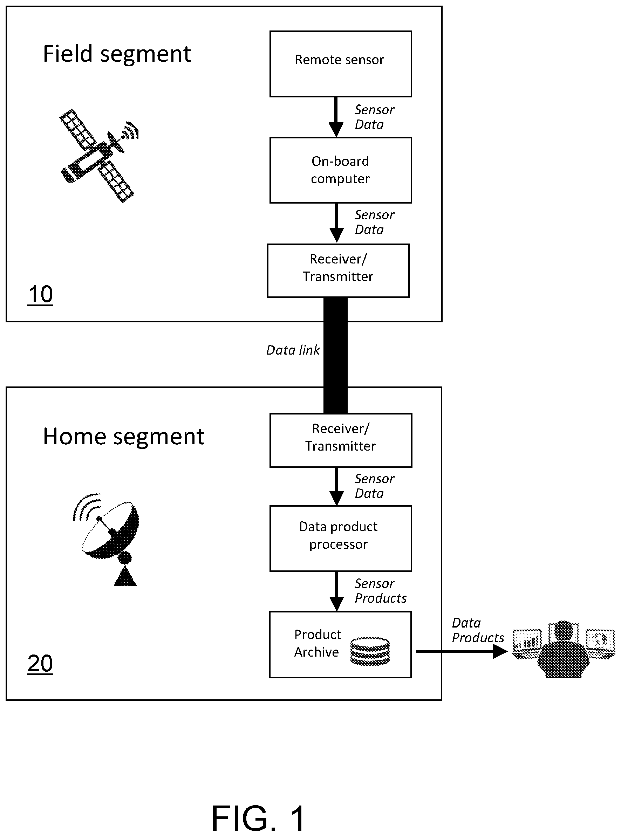

FIG. 1 is a schematic diagram illustrating an example of a traditional remote sensing system architecture. In the traditional approach, data is collected and stored at a remote location, here referred to as the Field Segment 10 and downlinked to what is here referred to as the Home Segment 20 in the order in which it was collected, and then processed on ground and distributed to users. The Field Segment 10 is characterized by including the sensor or sensors and the Home Segment 20 is characterized by distributing data or data products to end users. The limited data bandwidth of the downlink from the Field Segment 10 to the Home Segment 20 is typically a bottleneck in the remote sensing system.

The present invention addresses the problem of managing the increasingly higher data rates and volumes that remote sensing generates at the sensor level.

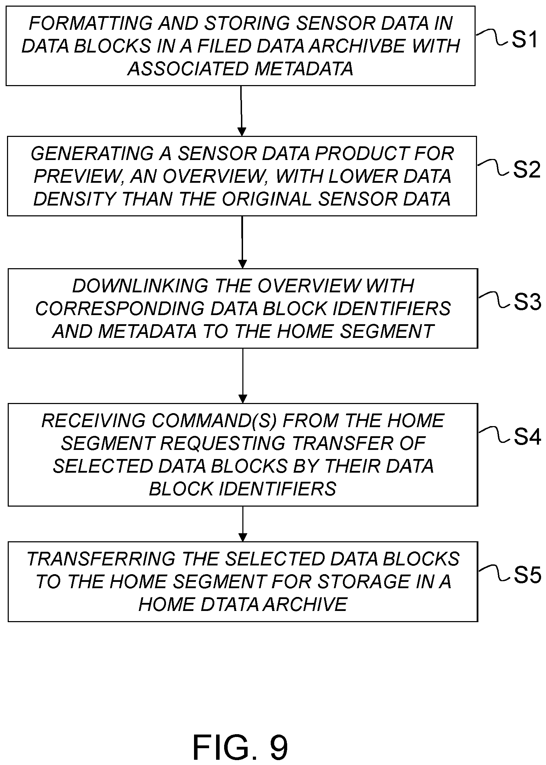

FIG. 9 is a schematic flow diagram illustrating an example of a method for managing sensor data collected and registered by a remote sensing system at a remote field location, referred to as the field segment, and downlinking sensor data to a separate location, referred to as the home segment.

Basically, the method comprises the steps of:
- formatting and storing (S1) sensor data in data blocks in a field data archive together with associated metadata describing the collected sensor data, wherein each data block has a corresponding data block identifier in the field data archive;
- generating (S2) a sensor data product for preview, referred to as an overview, from the sensor data stored in data blocks in the field data archive, wherein the generated overview is a data product with lower data density than the original/collected sensor data;
- downlinking (S3) the overview together with corresponding data block identifiers and associated metadata to the home segment to enable a ground-based process where data blocks, representing a selected subset of sensor data, are selected for transfer based on the content of the overview and/or associated metadata;

- receiving (S4) command(s) from the home segment requesting transfer of selected data blocks by their data block identifiers to the home segment; and
- transferring (S5) the selected data blocks to the home segment for storage in a home data archive to enable delivery of a sensor data product to end-users.

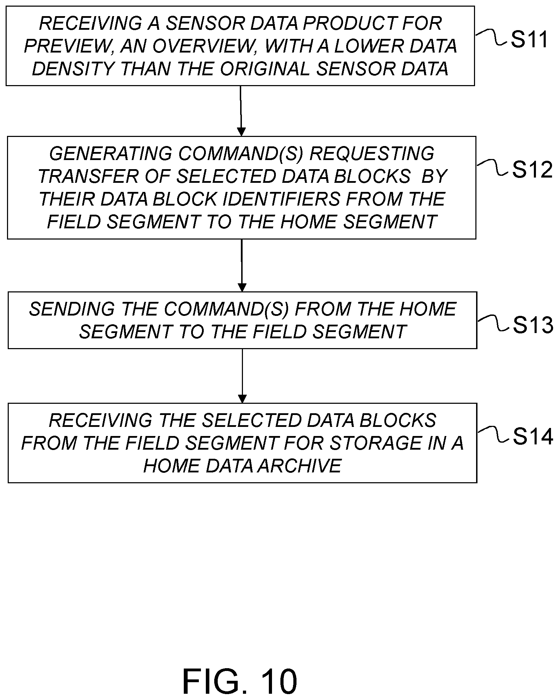

FIG. 10 is a schematic flow diagram illustrating an example of a method for requesting sensor data from a remote sensing system at a remote field location, referred to as the field segment, to a separate location, referred to as the home segment.

Basically, the method comprises the steps of:
- receiving (S11) a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment, and wherein the overview has lower data density than the original/collected sensor data;
- generating (S12) command(s) requesting transfer of selected data blocks by their data block identifiers from the field segment to the home segment, wherein the selected data blocks represent a selected subset of sensor data;

- sending (S13) the command(s) from the home segment to the field segment; and
- receiving (S14) the selected data blocks from the field segment for storage in a home data archive to enable delivery of a sensor data product to end-users.

As an example, the remote sensing system may be a satellite-based remote sensing system.

By way of example, the sensor data may include representations of earth observations, astronomical observations, radar sweeps or CCTV data.

According to a particular example, the metadata includes information about sensor settings and status, sensor position and orientation and/or ambient conditions.

For example, the metadata may include information about sensor acquisition parameters.

Normally, the metadata may contribute to locate sensor data in space and time.

As an example, the metadata includes estimates of position, orientation, and setting of the sensor at the time of the data collection.

In a particular example, the command(s) for requesting selected data blocks includes a list of data blocks for download and/or a list of data blocks for deletion.

As an example, the command(s) for requesting selected data blocks includes data block request arguments, and the data block request arguments include sensor channels to be included, resolution and block identifier.

In a specific embodiment, data blocks are requested by their address identifier to be downloaded at a specified resolution.

Normally, the overviews and/or the associated metadata allow an agent remotely located from the sensing system to select which data should be transferred to the home segment, prioritize the order in which data should be transferred to the home segment and/or decide in what resolution sensor data should be transferred.

By way of example, when preparing overviews and data blocks, the data processing may be configured to selected richness and processing level.

For example, configuration parameters for preparing overviews and/or data blocks may include at least one of source data density, image resolution, inclusion of metadata, superimposing layers of data, time interval, geographical area depicted, segment of orbit where the data was collected, time interval when the data was collected, segment of the spectrum, i.e. color, or sensor head.

In a particular embodiment, the home segment may receive input from the agent and generate a command sequence to control the field segment to perform the actions commanded by the agent.

By way of example, the agent may be a computer system in the home segment with automatic detection of data corresponding to cloud covered areas in the sensor data, enabling data corresponding to areas with detected clouds to be deleted from the field data archive by automatic decisions from the agent in the home segment.

Alternatively, or as a complement, a cloud detection agent may be included in the field segment making it possible to automate cleaning or marking of data corresponding to cloudy areas directly in the field segment.

In the following, different aspects of the proposed technology will be described with reference to non-limiting examples.

The invention limits the amount of data that needs to be transferred to a data processing node by storing the data at the site of the sensor while allowing an agent (human or machine) remotely located from the sensor to select which data (such as a selected subset of the sensor data), prioritize the order in which data should be transferred to the data processing node and/or decide in what resolution sensor data should be transferred. Decisions of data selection, priority and/or resolution are normally based on initially transferred low resolution data sets, also referred to as previews, overviews or quick-looks, from which the need for information content at a deeper depth of detail can be assessed. In general, the decisions can be made based on overview(s) and/or associated metadata.

Remote sensing systems, such as satellite-based imaging systems, typically generate huge amounts of data. In particular, when the remote sensor generates data faster than the data link can transfer the data down to the ground or home segment of the system, the bandwidth of the data link will limit the performance of the overall system.

It has been recognized that all sensor data generated by the remote sensing systems is not relevant for the end-users. Large amount of the generated data will never be used in practice. By discriminating data of no interest already before such data passes the bottleneck data link, and at least to a larger extent transfer data of relevance to the end-users, the system can be used more efficiently and the performance of the system can be increased.

By way of example, which data that are considered to be of interest may be decided downstream of the bottleneck data link, i.e. in the Home Segment of the system.

Pending a decision of which data that are relevant for transfer over the data link, sensor data are initially stored in the Field Segment 10. To provide the operations and control system at the Home Segment 20 with a basis for deciding which sensor data that are relevant, a sensor data product is generated for preview, a so-called overview product. This overview product is generated from the collected data upstream of the data link, i.e. at the Field Segment 10, as a product with lower data density than the original sensor data but still providing sufficient information to allow for making informed data management decisions based on the overview and/or associated metadata. Based on which subset of the sensor data that is determined to be of interest, the operations and control system at the home segment may then request that the selected data subset is transferred from the Field Segment 10 to the Home Segment 20 over the data link. The control system at the home segment may also request that sensor data stored at the remote sensing location should be deleted, e.g. because the data is not considered to be relevant and/or to release storage space and allow new data from the sensors to be stored.

In other words, the proposed solution is based on the assumption that very small parts of the generated sensor data is ever used. Large portions of the data can be kept close to the sensor in a sensor platform archive. Only relevant data is downloaded. Relevant data may include overviews, metadata, and/or image segments that will be used. The download process becomes an on-demand download process. The sensor platform archive is large enough to keep sensor data for longer periods while waiting for the on-demand process to trigger download. In the end data never downloaded may be removed from the sensor platform archive.

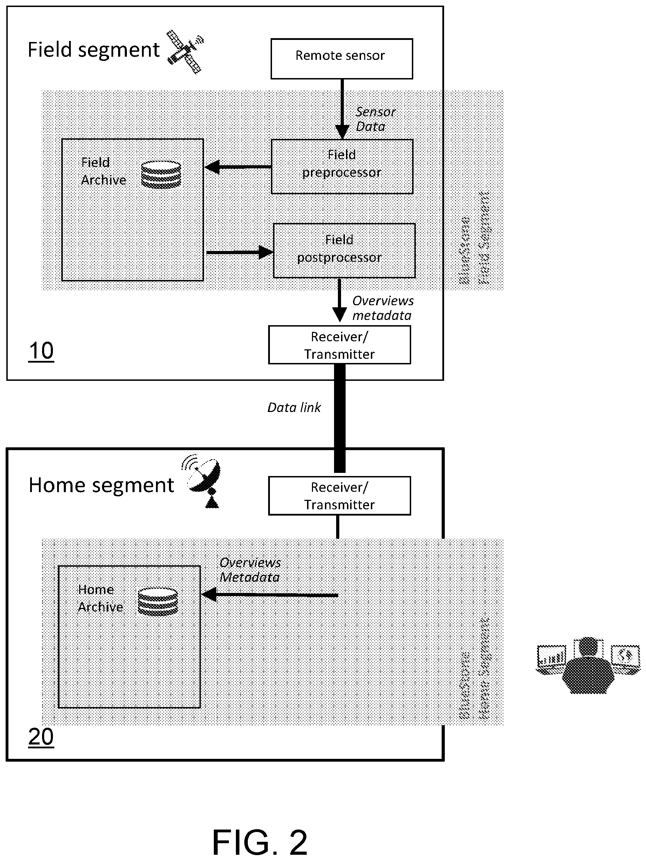

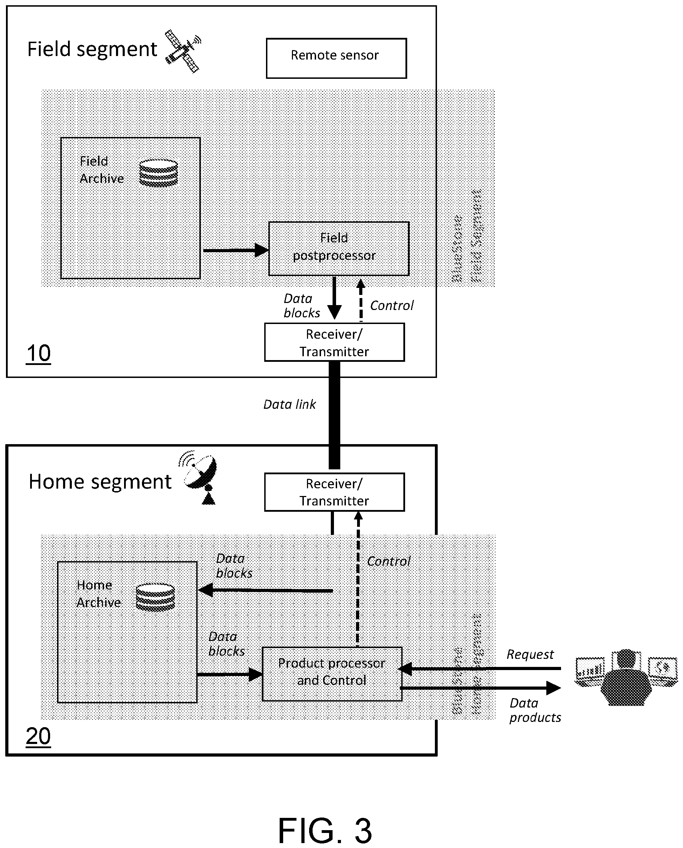

In brief, at least some of the embodiments of the present invention to be described herein supports and/or enables various parts of the following overall process:
1. Sensor data collection (Figure 2)
   Registration of sensor data together with registration of metadata. By way of example the sensor data could be representations of Earth Observations, Astronomical Observations, Radar Sweeps or CCTV. Similarly, meta data could be information about sensor settings and status, sensor position and orientation and/or ambient conditions.
2. Condition data (Figure 2)
   The sensor data and metadata is stored temporarily and conditioned into data blocks with associated metadata before being stored in the Field Archive
3. Downlink to Home Segment (Figure 2)
   At the time when a connection between the Field Segment 10 and the Home Segment 20 is established, an overview data product is generated from the sensor data stored in the Field Archive and downloaded immediately together with slot index and metadata.
4. Evaluating data (Figure 3)
   The data stored in the field archive is evaluated by human and/or machine agents through the overview product and the metadata and a list of data blocks for download and a list of data blocks for deletion is prepared.
5. Requesting download of data blocks (Figure 3)
   From the lists of data blocks for download and deletion a command sequence is prepared to command the Field Segment 10 of the present invention to download a selection of data blocks to the Home Segment 20 and to delete another selection of data blocks.
6. Receiving data blocks (Figure 3)
   When a link between the Field and Home Segments have been established the Field Segment 10 of the present invention proceeds to download the selected data blocks for storage in the Home Archive in the Home Segment 20.
7. Deliver data to user. (Figure 3)
   When the data is present in the Home Archive in the Home Segment, the product processor can be started to compute products and the resulting product can be delivered to the end user.

### Interfaces

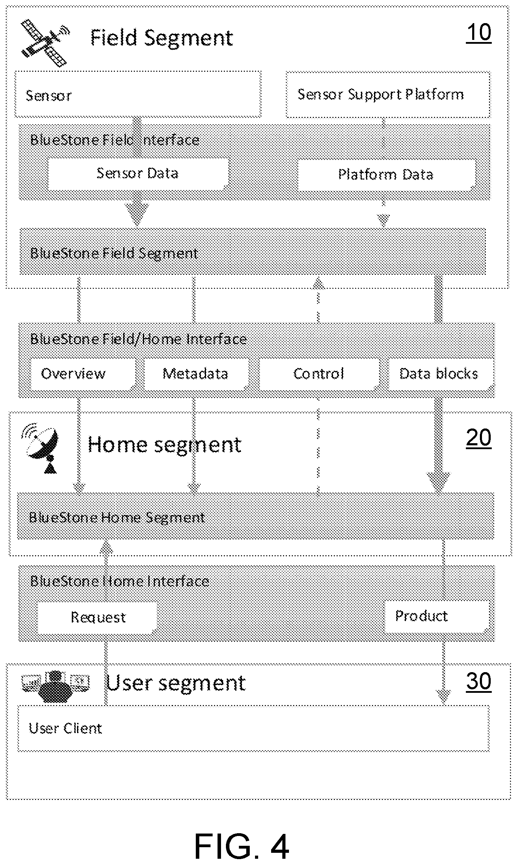

In a particular example, the archive functionality may be managed by the following interfaces (also illustrated in Figure 4):
A. Field Interface: Flow of Sensor data and metadata generated by the sensor and associated support systems.
B. Field/Home Interface including the following cases:
   a. Push data: Flow of overview products and metadata from the field archive to the home archive. Overview products and metadata may be transferred as soon as available.
   b. Control: Flow of data block retrieval and deletion requests Field Segment configuration commands. Data blocks retrieval commands are normally generated on user demand. By example data block request arguments for image data can be: 1) sensor channels to be included, 2) resolution and 3) block identifier.
   c. Pull data: Flow of data blocks from the Field Archive to the Home Archive. Data blocks are normally sent on request.
C. Home Interface: Flow of end user data products from the Home Archive.

FIG. 2 is a schematic diagram illustrating an example of a first aspect or part of a data retrieval process according to an embodiment of the invention. This particular example illustrates how an overview product, or preview, of the sensor data is generated in the Field Segment 10 together with metadata and subsequently downlinked to enable a ground-based process where data is selected for transfer based on the content of the overview product and/or associated metadata.

In this example, the overview data is generated by a downscaling the sensor data in the data archive to a lower data density product. The downscaling algorithm outputs a less rich overview product based on the archived sensor data. The overview is downloaded to the Home Segment 20 together with a set of metadata describing the original collected sensor data stored in the field archive. By example, the metadata contains sensor acquisition parameters. The download of the overview product and metadata is done in a systematic manner making it possible for the Home Segment virtual data archive to define a virtual copy of the remote Field Segment data archive. The overview and metadata is being pushed to from the Field Segment to the home segment. By way of example, the virtual archive is an identical copy of the current field archive where all overviews and metadata are present but only a limited set of the sensor data blocks. In addition to this the virtual archive may also contain all data downloaded to date and that includes data that has been deleted in the Field Archive.

FIG. 3 is a schematic diagram illustrating an example of a second aspect or part of a data retrieval process according to an embodiment of the invention. This particular example illustrates how a subset of data is transferred from the remote Field Segment archive based on instructions generated on ground. The transferred data blocks is refined as products and distributed to the users in the Home Segment.

The collected sensor data is stored in the remote Field Segment data archive in full resolution until requested from the Home Segment or deleted by command from the Home Segment. Collected sensor data is stored in a block structure in the data archive. All data blocks are present in the remote field data archive but only present in the home field virtual archive if downloaded on demand. By way of example, the on demand download process is per block. Data blocks are "pulled" from the field segment to the home segment.

When preparing overviews and data blocks the data processing can be configured to expected richness and processing level. The configuration parameters can include, but is not limited to, properties such as source data density, image resolution, inclusion of metadata, superimposing layers of data, time interval, geographical area depicted, segment of orbit where the data was collected, time interval when the data was collected, segment of the spectrum (color) or sensor head (when more than one is present).

The present invention has implications in the Field Segment 10 and/or the Home Segment 20. The Field Segment 10 may refer to the part of the overall system where the remote sensing takes place. Depending on the application, this may sometimes be referred to as the Space Segment (in a satellite-based remote sensing system), or simply the Remote Segment. The Home Segment 20 may also be referred to as Ground Segment or Sensor Operations Segment.

By way of example, the Field Segment 10 receives data from the sensor and stores it in a segmented or tiled partitioning data structure in a field data archive. By way of example, when a link to the Home Segment 20 is established the Field Segment may transfer an overview data product and metadata, signified by covering at least part (all or part) of the full data set at a lower data density than the full raw data set. The overview data set is generated by the field data processing parts in the Field Segment from the full raw data set either at the time of its transfer to the Home Segment or before.

The overview data set may be presented to an agent (human or machine) by the data processing parts in the Home Segment or in the Field Segment. From the presented preview data and/or associated metadata the agent can prioritize in which order and which associated data in the full data set shall be transferred from the Field Segment to the Home Segment, and/or in what data density it should be transferred or if it should be deleted from the field storage. The Home Segment of the present invention receives input from the agent and generates a command sequence to control the Field Segment to perform the actions commanded by the agent.

The Field Segment of the present invention may then receive the command sequence and proceed to act upon it, managing data in the Field Segment archive, compressing and transferring data.

By way of example, the agent in the Home Segment can be a computer system with automatic detection of cloud covered areas in the sensor data. Areas with detected clouds can then be deleted from the Field Segment data archive by automatic decisions from the agent in the Home Segment.

By way of example, the cloud detection agent can also be present in the Field Segment making it possible to automate cleaning or marking of cloudy areas directly in the Field Segment.

By way of example, the agent in the Home Segment can be a computer system with automatic computation tools to increase accuracy of the sensor's geometric and/or radiometric properties in the metadata. The corrected metadata properties can then be uploaded to the Field Segment.

### System aspects

According to an aspect of the proposed technology, there is provided a system for managing sensor data collected and registered by a remote sensing system at a remote field location, referred to as a field segment 10, and downlinking sensor data to a separate location, referred to as a home segment 20.

The system is configured to format and store sensor data in data blocks in a field data archive together with associated metadata describing the collected sensor data, wherein each data block has a corresponding data block identifier in the field data archive.

The system is configured to generate a sensor data product for preview, referred to as an overview, from the sensor data stored in data blocks in the field data archive, wherein the generated overview is a data product with lower data density than the original sensor data.

The system is also configured to downlink the overview together with corresponding data block identifiers and associated metadata to the home segment to enable a ground-based process where data blocks, representing a selected subset of sensor data, are selected for transfer based on the content of the overview and/or associated metadata.

The system is further configured to receive command(s) from the home segment requesting transfer of selected data blocks by their data block identifiers to the home segment.

The system is also configured to transfer the selected data blocks to the home segment for storage in a home data archive to enable delivery of a sensor data product to end-users.

According to another aspect of the proposed technology, there is provided a system for requesting sensor data from a remote sensing system at a remote field location, referred to as a field segment 10, to a separate location, referred to as a home segment 20.

The system is configured to receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment.

The system is also configured to generate command(s) requesting transfer of selected data blocks by their data block identifiers from the field segment to the home segment, wherein the selected data blocks represent a selected subset of sensor data.

The system is further configured to send the command(s) from the home segment to the field segment.

The system is also configured to receive the selected data blocks from the field segment for storage in a home data archive to enable delivery of a sensor data product to end-users.

As an example, the remote sensing system may be a satellite-based remote sensing system.

By way of example, the metadata typically contributes to locate sensor data in space and time.

For example, the metadata may include estimates of position, orientation, and setting of the sensor at the time of the data collection.

In a particular example, the command(s) for requesting selected data blocks includes a list of data blocks for download and/or a list of data blocks for deletion.

For example, the data blocks may be requested by their address identifier to be downloaded at a specified resolution.

In another example, when preparing overviews and data blocks, the system may be configured to perform data processing to selected richness and processing level.

In the following, the proposed technology will be discussed with reference to non-limiting examples of implementation.

### Field Segment

By way of example, the Field Segment 10 handles remote sensing, image data collection and field archiving of data and includes one or more sensors, sensor support platforms, and items of the field segment of the present invention such as a field preprocessor, a temporary data storage, a field archive and/or a field postprocessor.

### Field Segment Items

By way of example, the aforementioned field items of present invention are embodied as electronics devices executing software code and have two interfaces over which data is exchanged with the Field Segment 10. The first data interface is the data interface to the sensor or sensors and to the sensor support platform, named the Field Interface. The second data interface is the interface to the Home Segment, named the Field/Home Interface.

### Field Interface

By way of example, data from sensor and sensor support platform data is input into the field segment of the present invention over the Field Interface.

### Sensor Data

By way of example, sensor data is constituted of two parts: sensor data such as image data and sensor housekeeping data such as timing and temperature measurements from the sensors.

### Platform data

By way of example, platform data is constituted by measurement readings from platform thermistors and estimates of platform position and orientation made by the sensor support platform.

### Field Preprocessor

By way of example, the field preprocessor collects sensor data and platform data through the field interface and stores it temporarily in a temporary data storage. From the data stored in the temporary storage the field preprocessor conditions the sensor data into Sensor Data Blocks for archiving in the field archive together with Sensor Data Blocks Slot Allocation and Sensor and Platform Metadata. By way of example the Field Preprocessor can be embodied in a Field Programmable Gate Array (FPGA).

### Data for intermediate storage

Data received by the Field Preprocessor through the Field Interface is stored in the Temporary Data Storage upon reception.

### Temporary Data Storage

By way of example, the Temporary Data Storage is a Random Access Memory (RAM) area where incoming data is stored temporarily pending conditioning by the Field Preprocessor for storage in the Field Archive.

### Sensor and Platform Metadata

By way of example, Sensor and Platform metadata is data that is associated to can contribute to locate sensor data in space and time as well as to provide important contributions when the sensor data is interpreted. Examples of such information are: estimates of the position, orientation and setting of the sensor at the time of data collection.

### Data Blocks Slot Allocation

By way of example, Sensor Data is formatted into Sensor Data Blocks that are stored in the Field Archive. The location of these blocks are described in the Sensor Data Blocks Slot Allocation data structure that is stored separately in the Field archive for the purpose of allowing selected data to be easily accessed for retrieval or deletion from the archive.

### Data Blocks

By way of example, the Field Preprocessor conditions sensor data into Data Blocks suitable for retrieval by the Home Segment of the present invention. The Data Blocks are stored in the Field Archive pending retrieval and/or deletion.

### Field Archive

By way of example, the field archive is partitioned into segments, data blocks or slots where data blocks can be stored. Each segment or block storage position has a unique address identifier. For each segment or block, metadata is registered, e.g. including image capture/collect information with attitude and orbit position data.

With Field Archive flash storage interleaving, to enable 1) high bandwidth write and read, and 2) immunity to burst data corruption, the data may be interleaved over several memory storage circuits.

### Field Postprocessor

By way of example, the Field Postprocessor accesses the Field Archive from which it pulls recent metadata and data blocks and uses it to create an overview product that is pushed together with recently collected metadata and current Data Blocks Slot Allocation information to the Home Segment of the present invention.

By way of example, the field postprocessor may, upon request through the Field/Home Interface, retrieve data blocks and/or metadata from the field archive and output it over the same interface.

By way of example, in an imaging application system, image data blocks can be accessed through the Field Postprocessor for download in non-full resolution. When the data is read from the field archive, a lower resolution image may be generated in real time for download. For example, the lower resolution generation may be implemented in FPGA Register Transfer Logic (RTL). The resolution downscaling may for example be performed separate per colour channel, and by captured raw pixel geometries.

By way of example, at ground connect, the overview data product and registered metadata is downloaded, data blocks are requested by their address identifier to be downloaded at a specified resolution, command to clear a data block slot by their address identifier.

The requested data blocks and metadata are put into a virtual queue. When the data is accessed from the database and packeted into the downloading protocol scheme (for example CCSDS), the data blocks are fetched from the memory and downscaled in real-time.

### Field/Home Interface

By way of example, the Field/Home Interface is the downstream data interface of the Field Segment of the present invention. Overview data, metadata, commands and data blocks are exchanged over this interface.

### Overview

By way of example, Overview data is a data product based on the data set collected but with less data density. The Overview is output from the Field Segment of the present invention and enables prioritization of data download from the Field Segment to the Home Segment and also prioritization of data to be deleted.

### Metadata

By way of example, Metadata consists of data from the sensor itself and from the sensor support platform and that is not considered to be the main sensor measurement output but can either support the selection of data to be retrieved from the Field Segment or that can an integral part of the refinement of the retrieved data. Metadata is output from the Field Sement of the present invention over the Field/Home Interface.

### Commands

By way of example, the Field Segment 10 of the present invention will accept commands over the Field/Home Interface. Examples of commands are to retrieve a certain set of data blocks or to delete another set of data blocks from the field archive. Another example of a command is to adjust the settings for the preprocessor for generating data blocks from sensor data for storage in the Field Archive or for the postprocessor for generating the overview product or postprocessing of data blocks before outputting them over the Field/Home Interface of the present invention.

The application of the invention allows for a controlled method of managing the rate and volume of transferred data so that data of the highest priority can be transferred before data of lower priority and also so that data with no value can be discarded at only a low cost of transfer link capacity. By example, the resulting actions for managing rate and volume that has been commanded through the Field/Home Interface is effectuated by the Field Postprocessor.

The application of the invention also allows for reduced data rates and volumes through transferring of data only to the data density that is required.

By way of example, deeper resolution of agricultural image data may not be as valuable as overviews and image data sets of oceans may be interesting only on the parts where there are vessels present in the pictures.

Examples of functionalities in the Field Segment:
- Sensor data generation (image sensor)
- Metadata computation

In particular, examples of functionalities in the Field Segment that can be attributed to the present invention are:
- Formatting of sensor data into data blocks
- Overview or preview computation
- Storage of overviews in Field Segment Data Archive
- Storage of metadata in Field Segment Data Archive
- Storage of data blocks in Field Segment Data Archive
- Systematic transfer of overviews and metadata from Field Segment to Home Segment
- On demand transfer of data blocks from Field Segment to Home Segment
- Management of the data archive

### Home Segment

By way of example, the Home Segment 20 receives overviews, metadata and remote sensing data blocks from the Field Segment 10. The received data is transferred into requested data products. Among other things, the Home Segment 20 comprises: a controller, a home archive and a product processor.

### Home Segment Items

By way of example, the aforementioned field items of present invention are embodied as electronics devices executing software code and have two interfaces over which data is exchanged with the Home Segment. The first data interface is the Field/Home Interface. The second data interface is the interface to the User Segment, named the Home Interface.

### Field/Home Interface

The Field/Home interface is described in the Field Segment.

### Home Interface

By way of example, requests for sensor data products as well as resulting products is handled by the Home interface.

### Control

By way of example, decisions of which Sensor Data Blocks to download from the Filed Archive is made by Control. Decisions can for example be based on user requests for Data Products or automated algorithms running with the goal to optimize the download.

The Control in the Home Segment is responsible for the management of the Sensor Data Blocks in the Field Archive as well as the Home Archive. Management includes decisions on how long Data Blocks shall be kept.

By way of example, the Control may send management control commands to erase all Sensor Data Blocks as soon as they are concluded to be covered by clouds.

By way of example, the Control may send management control commands to erase all Sensor Data Blocks older than five days and never requested for download to the Home Archive.

### Home Archive

The Home archive is populated with the same data as the Field Archive with one exception. The Sensor Data Blocks is only available if requested and downloaded on demand from the Field Segment. The Home Archive is acting as a virtual copy of the Field Archive.

By way of example, overviews and meta data is transmitted in a systematic way by the Field Segment. When received by the Home Segment, the overviews and meta data is added to the Home Archive.

By way of example, a Sensor Data block is only downloaded from the Field Archive if it has been requested from the Home Segment. A data block that is never requested will stay in the Field Archive and live there until a request for deletion is received.

### Product Processor

Data products are generated by the Product Processor. Before a product process is started it is determined whether all Sensor Data Segments are available or not in the Home Archive. Missing Sensor Data Segments are requested from the Field Archive. Once all Sensor Data Blocks are available the Product processor can start to process the requested products.

By way of example, the product processor can be configured to process large datasets with a wide area coverage. This implies requesting a large number of Sensor Data Blocks from the Field Archive before starting the product process. By way of example, the product processor can be configured to support Services such as OGC-WMS using the available overview data in the Home Archive. Sensor Data block already available in the Home Archive can also be made part of such a service.

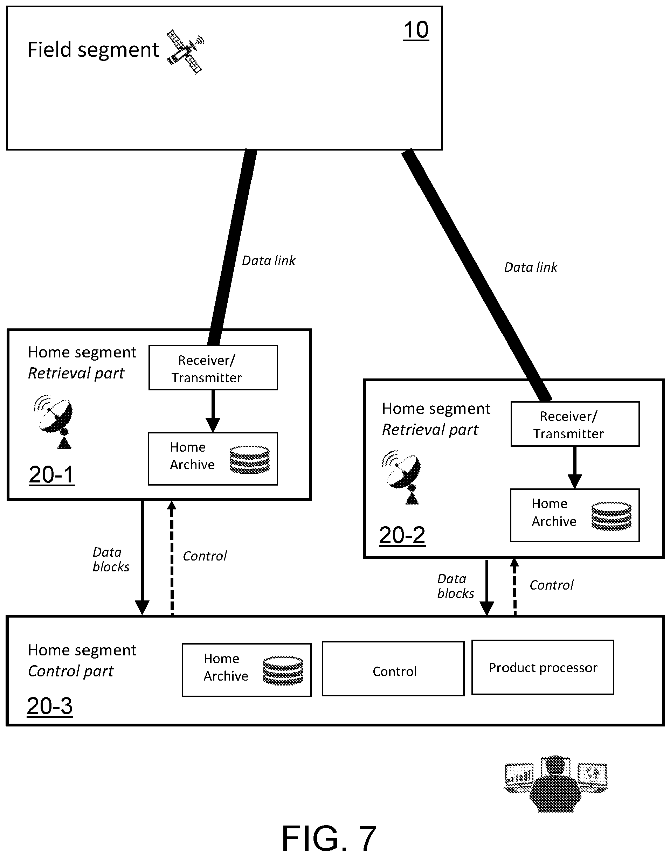

By way of example, the product processor can be configured to make systematic download of predefined areas as soon as they are available in the Field Archive. The predefined areas can for example be based on subscriptions where users have explicitly asked to be notified when data is available over a specific area. The Home segment can be deployed in various configurations. The most straightforward is a single Home Segment node receiving data from a Field Segment. The Home segment can also be partitioned into a retrieval and control part making it possible to deploy a distributed system. The Retrieval part manages the communication with the Field Segment and can be deployed in many instances as shown in FIG 7. The control part of the Home Segment is a single instance responsible for coordinating the retrieval nodes and handling the Control functionality. Booth the retrieval part and the Control part has an instance of the Home Archive

By way of example, a distributed system can have many Field Segments and many Home Segments communicating with each other.

By way of example, every data item in a distributed system has a unique identifier. Examples of data items include metadata, overview and Sensor Data Blocks. The identifier makes it possible to identify the origin of the Sensor Data Block as well as keeping an index of where it is located.

By way of example, a data item can be located in one Field Archive and zero, one or many Home Archives. The same data item can be located in more than one Home Archive to achieve redundancy and performance gain.

By way of example, a satellite system is deployed with one satellite (Field System) and two ground stations named A and B (Home Segment, retrieval part) and a Production and control unit. (Home segment, control part). After capturing sensor data, the satellite downlinks overviews and metadata to the ground station that first will come into field of view for transmission, for example A. The overview and metadata is handled by the receiving ground station A, stored in the Home Archive and distributed to the responsible Control part. The Control part decides which Data Blocks to be downloaded based on for example computed cloud information, subscriptions or customer orders. A download control command with specified Data Blocks is sent to the satellite via the ground station. The satellite prepares the requested Data Blocks and downloads them either at once while being in contact with the ground station or at the next ground station contact, for example passing ground station B. Received Data Blocks are stored at the receiving ground station in the local Home Archive. By way of example, Data Blocks received in a distributed system will be stored at the receiving ground station in the Home Archive. The Data Blocks can be requested from the connected Control part for product processing.

By way of example, the control part has all information where a specific Data Block is located, at what ground station, and how to access this data block.

By way of example, a UAV system used for inspecting long power lines can be deployed with multiple Home Segment retrieval nodes. The retrieval nodes is located along the flight track so that the flying UAV can download metadata and overviews in a regular pattern. The connected Home Segment control part can then decide what Sensor Data Blocks to be downloaded while passing the next Home Segment retrieval node.

By way of example, the product processor can be located in booth the retrieval or control part of the Home Segment. When a product is requested the product processor is responsible for gathering the Sensor Data Blocks needed for the product.

By way of example, the control part is responsible for managing the distributed Home Archives as well as the Field Archive. The control part decides when to download a Sensor Data Segment from the Filed Archive and to which Home Archive. The control part also decides when to move a Sensor Data Block from a Home Archive in a retrieval part to the Home Archive in the control part.

By way of example, the control part is responsible for deciding when to delete Sensor Data Blocks in any of the Field Archives or Home Archives.

Examples of functionalities in the Home Segment:
- Receiving overviews and metadata from Field Archive.
- Receiving selected data blocks from Field Archive.
- Storage of overviews and metadata in Home Archive
- Storage of data blocks in Home Archive
- Management of the Home Archive
- Selection and prioritization of a data blocks to be downloaded.
- Generating control commands corresponding to data blocks selection and prioritization

In a particular non-limiting application and example, the invention relates to archiving satellite image data such as earth observation data on-board the satellite and making it available, in an efficient manner, to the ground units so that one or more users may have access to a so-called virtual archive copy. By virtual is meant a copy that appears visually as a full copy to the user, but is downloaded on demand as a selected subset of the satellite archive.

It will be appreciated that the methods and arrangements described herein can be implemented, combined and re-arranged in a variety of ways.

For example, embodiments may be implemented in hardware, or in software for execution by suitable processing circuitry, or a combination thereof.

By example, the Field Segment of the present invention may be implemented as an electronics unit containing Field Programmable Gate Arrays FPGA with logic implemented in Register Transfer Logic (RTL) in combination with software for the Field Preprocessor and the Field Postprocessor. The Field Archive may be implemented as NAND Flash integrated circuits capable of storing multiple days, months or years of worth of collected data.

By example the Field Interface may be implemented in SpaceWire, Rapid IO or another standard or non-standard data bus or a combination of such data buses on an electrical physical layer. By comparison the Field/Home Interface may be implemented on the same or other data buses but using electromagnetic waves at radio frequencies as the physical layer.

The steps, functions, procedures, modules and/or blocks described herein may be implemented in hardware using any conventional technology, such as discrete circuit or integrated circuit technology, including both general-purpose electronic circuitry and application-specific circuitry.

According to an aspect, there is provided an electronic circuit configured to manage sensor data collected and registered by a remote sensing system at a remote field location, referred to as a field segment, and enabling downlinking of sensor data to a separate location, referred to as a home segment. The electronic circuit is configured to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- enable downlinking of the overview together with corresponding data block identifiers and associated metadata to the home segment to enable a ground-based process where data blocks, representing a selected subset of sensor data, are selected for transfer based on the content of the overview and/or the associated metadata;
- receive command(s) from the home segment requesting transfer of selected data blocks by their data block identifiers to the home segment; and
- enable transfer of the selected data blocks to the home segment for storage in a home data archive to enable delivery of a sensor data product to end-users.

According to another aspect, there is provided an electronic circuit configured to request sensor data from a remote sensing system at a remote field location, referred to as a field segment, to a separate location, referred to as a home segment. The electronic circuit is configured to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the home segment, wherein the selected data blocks represent a selected subset of sensor data;
- enable transfer of the command(s) from the home segment to the field segment; and
- receive the selected data blocks from the field segment for storage in a home data archive to enable delivery of a sensor data product to end-users.

Alternatively, or as a complement, at least some of the steps, functions, procedures, modules and/or blocks described herein may be implemented in software such as a computer program for execution by suitable processing circuitry such as one or more processors or processing units.

Examples of processing circuitry includes, but is not limited to, one or more microprocessors, one or more Digital Signal Processors (DSPs), one or more Central Processing Units (CPUs), video acceleration hardware, and/or any suitable programmable logic circuitry such as one or more Field Programmable Gate Arrays (FPGAs), or one or more Programmable Logic Controllers (PLCs).

It should also be understood that it may be possible to re-use the general processing capabilities of any conventional device or unit in which the proposed technology is implemented. It may also be possible to re-use existing software, e.g. by reprogramming of the existing software or by adding new software components.

The overall functionality may also be partitioned between programmed software, SW, for execution on one or more processors, and one or more pre-configured or possibly reconfigurable hardware circuits such as ASICs and/or FPGAs. The actual hardware-software partitioning can be decided by a system designer based on a number of factors including processing speed, cost of implementation and other requirements.

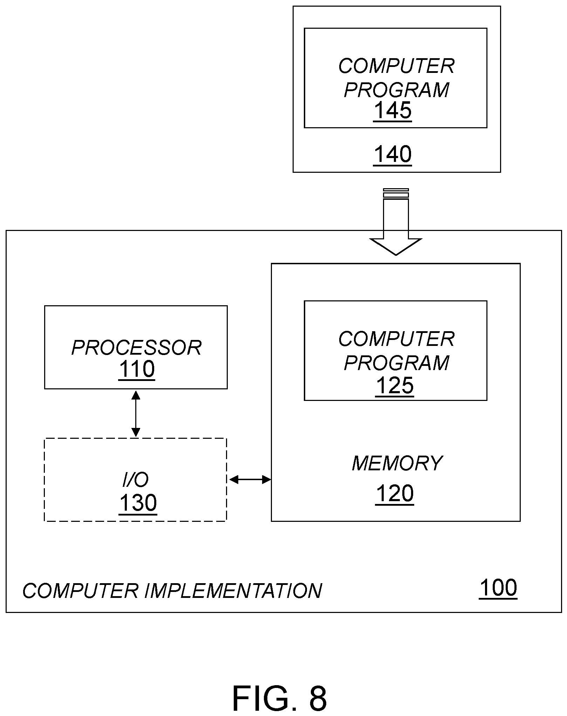

FIG. 8 is a schematic diagram illustrating an example of a computer-implementation according to an embodiment. In this particular example, at least some of the steps, functions, procedures, modules and/or blocks described herein are implemented in a computer program 125; 145, which is loaded into memory 120 for execution by processing circuitry including one or more processors 110. The processor(s) 110 and memory 120 are interconnected to each other to enable normal software execution. An optional input/output device 130 may also be interconnected to the processor(s) 110 and/or the memory 120 to enable input and/or output of relevant data such as input parameter(s) and/or resulting output parameter(s).

The term 'processor' should be interpreted in a general sense as any system or device capable of executing program code or computer program instructions to perform a particular processing, determining or computing task.

The processing circuitry including one or more processors is thus configured to perform, when executing the computer program, well-defined processing tasks such as those described herein.

The processing circuitry does not have to be dedicated to only execute the above-described steps, functions, procedure and/or blocks, but may also execute other tasks.

In a particular embodiment, the computer program comprises instructions, which when executed by at least one processor, cause the processor(s) to perform at least part of the steps and/or actions or tasks described herein.

The system(s) described herein may thus comprise at least one processor 110 and memory 120, the memory 120 comprising instructions, which when executed by the at least one processor 110, cause the at least one processor 110 to manage or request sensor data.

According to an aspect of the proposed technology, there is provided a computer program for managing, when executed by a processor, sensor data collected and registered by a remote sensing system at a remote field location, referred to as a field segment, and enabling downlinking of sensor data to a separate location, referred to as a home segment. The computer program comprises instructions, which when executed by the processor, cause the processor(s) to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- enable downlinking of the overview together with corresponding data block identifiers and associated metadata to the home segment to enable a ground-based process where data blocks, representing a selected subset of sensor data, are selected for transfer based on the content of the overview and/or the associated metadata;
- receive command(s) from the home segment requesting transfer of selected data blocks by their data block identifiers to the home segment; and
- enable transfer of the selected data blocks to the home segment for storage in a home data archive to enable delivery of a sensor data product to end-users.

By way of example, the computer program comprises instructions, which when executed, cause the processor(s) to prepare the overview for downlinking to the home segment. Similarly, the computer program may comprise instructions, which when executed, cause the processor(s) to prepare the selected data blocks for transfer to the home segment.

According to an aspect of the proposed technology, there is provided a computer program for requesting, when executed by a processor, sensor data from a remote sensing system at a remote field location, referred to as a field segment, to a separate location, referred to as a home segment. The computer program comprises instructions, which when executed by the processor, cause the processor(s) to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the home segment, wherein the selected data blocks represent a selected subset of sensor data;
- enable transfer of the command(s) from the home segment to the field segment; and
- receive the selected data blocks from the field segment for storage in a home data archive to enable delivery of a sensor data product to end-users.

By way of example, the computer program comprises instructions, which when executed, cause the processor(s) to prepare the commands for transfer from the home segment to the field segment.

By way of example, the software or computer program 125; 145 may be realized as a computer program product, which is normally carried or stored on a computer-readable medium 120; 140, in particular a non-volatile medium. The computer program 125; 145 may thus be loaded into the operating memory 120 of a computer or equivalent processing device for execution by the processing circuitry thereof.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

The computer program residing in memory may thus be organized as appropriate function modules configured to perform, when executed by the processor, at least part of the steps and/or tasks described herein.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible.

## Claims

1. A method for managing sensor data collected and registered by a remote sensing system at a remote field location, referred to as a field segment (10), wherein the remote sensing system is a satellite-based remote sensing system or the remote sensing is performed by Unmanned Aerial Vehicles (UAVs), and downlinking sensor data to a separate location, referred to as a ground or home segment (20), wherein the method comprises the steps of:
- formatting and storing (S1) sensor data in data blocks in a field data archive together with associated metadata describing the collected sensor data, wherein each data block has a corresponding data block identifier in the field data archive;
- generating (S2) a sensor data product for preview, referred to as an overview, from the sensor data stored in data blocks in the field data archive, wherein the generated overview is a data product with lower data density than the original sensor data;
- downlinking (S3) the overview together with corresponding data block identifiers and associated metadata to the ground or home segment to enable a ground-based process where data blocks, representing a selected subset of sensor data, are selected for transfer based on the content of the overview and/or the associated metadata;
- receiving (S4) command(s) from the ground or home segment requesting transfer of selected data blocks by their data block identifiers to the home segment; and
- transferring (S5) the selected data blocks to the ground or home segment for storage in a home data archive to enable delivery of a sensor data product to end-users.

2. A method for requesting sensor data from a remote sensing system at a remote field location, referred to as a field segment (10), wherein the remote sensing system is a satellite-based remote sensing system or the remote sensing is performed by Unmanned Aerial Vehicles (UAVs), to a separate location, referred to as a ground or home segment (20), wherein the method comprises the steps:
- receiving (S11) a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment, and wherein the overview has lower data density than the original sensor data;
- generating (S12) command(s) requesting transfer of selected data blocks by their data block identifiers from the field segment to the ground or home segment, wherein the selected data blocks represent a selected subset of sensor data;
- sending (S13) the command(s) from the ground or home segment to the field segment; and
- receiving (S14) the selected data blocks from the field segment for storage in a home data archive to enable delivery of a sensor data product to end-users.

3. The method of claim 1 or 2, wherein the sensor data includes representations of earth observations, astronomical observations, radar sweeps or CCTV data

4. The method of any of the claims 1 to 3, wherein the metadata includes information about sensor settings and status, sensor position and orientation and/or ambient conditions, and/or the metadata includes information about sensor acquisition parameters, and/or the metadata contributes to locate sensor data in space and time, and/or the metadata includes estimates of position, orientation, and setting of the sensor at the time of the data collection.

5. The method of any of the claims 1 to 4, wherein the command(s) for requesting selected data blocks includes a list of data blocks for download and/or a list of data blocks for deletion, and/or the command(s) for requesting selected data blocks includes data block request arguments, and the data block request arguments include sensor channels to be included, resolution and block identifier.

6. The method of claim 1, wherein the overviews and/or associated metadata allow an agent remotely located from the sensing system to select which data should be transferred to the home segment, prioritize the order in which data should be transferred to the home segment and/or decide in what resolution sensor data should be transferred.

7. The method of claim 1, wherein, when preparing overviews and data blocks, the data processing is configured to selected richness and processing level, and configuration parameters for preparing overviews and/or data blocks include at least one of source data density, image resolution, inclusion of metadata, superimposing layers of data, time interval, geographical area depicted, segment of orbit where the data was collected, time interval when the data was collected, segment of the spectrum, i.e. color, or sensor head.

8. The method of claim 2, wherein the home segment receives input from an agent and generates a command sequence to control the field segment to perform the actions commanded by the agent, and the agent is a computer system in the home segment with automatic detection of data corresponding to cloud covered areas in the sensor data, enabling data corresponding to areas with detected clouds to be deleted from the field data archive by automatic decisions from the agent in the home segment, or a cloud detection agent is included in the field segment making it possible to automate cleaning or marking of data corresponding to cloudy areas directly in the field segment.

9. A system (10; 100) for managing sensor data collected and registered by a remote sensing system at a remote field location, referred to as a field segment (10), wherein the remote sensing system is a satellite-based remote sensing system or the remote sensing is performed by Unmanned Aerial Vehicles (UAVs), and downlinking sensor data to a separate location, referred to as a ground or home segment (20), wherein the system is configured to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- downlink the overview together with corresponding data block identifiers and associated metadata to the ground or home segment to enable a ground-based process where data blocks, representing a selected subset of sensor data, are selected for transfer based on the content of the overview and/or the associated metadata;
- receive command(s) from the ground or home segment requesting transfer of selected data blocks by their data block identifiers to the home segment; and
- transfer the selected data blocks to the ground or home segment for storage in a home data archive to enable delivery of a sensor data product to end-users.

10. A system (20; 100) for requesting sensor data from a remote sensing system at a remote field location, referred to as a field segment (10), wherein the remote sensing system is a satellite-based remote sensing system or the remote sensing is performed by Unmanned Aerial Vehicles (UAVs), to a separate location, referred to as a ground or home segment (20), wherein the system is configured to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the ground or home segment, wherein the selected data blocks represent a selected subset of sensor data;
- send the command(s) from the ground or home segment to the field segment; and
- receive the selected data blocks from the field segment for storage in a home data archive to enable delivery of a sensor data product to end-users.

11. The system of claim 9 or 10, wherein the metadata contributes to locate sensor data in space and time, and/or the metadata includes estimates of position, orientation, and setting of the sensor at the time of the data collection.

12. An electronic circuit configured to manage sensor data collected and registered by a remote sensing system at a remote field location, referred to as a field segment, wherein the remote sensing system is a satellite-based remote sensing system or the remote sensing is performed by Unmanned Aerial Vehicles (UAVs), and enabling downlinking of sensor data to a separate location, referred to as a ground or home segment, wherein the electronic circuit is configured to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- enable downlinking of the overview together with corresponding data block identifiers and associated metadata to the ground or home segment to enable a ground-based process where data blocks, representing a selected subset of sensor data, are selected for transfer based on the content of the overview and/or the associated metadata;
- receive command(s) from the ground or home segment requesting transfer of selected data blocks by their data block identifiers to the home segment; and
- enable transfer of the selected data blocks to the ground or home segment for storage in a home data archive to enable delivery of a sensor data product to end-users.

13. An electronic circuit configured to request sensor data from a remote sensing system at a remote field location, referred to as a field segment, wherein the remote sensing system is a satellite-based remote sensing system or the remote sensing is performed by Unmanned Aerial Vehicles (UAVs), to a separate location, referred to as a ground or home segment, wherein the electronic circuit is configured to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the ground or home segment, wherein the selected data blocks represent a selected subset of sensor data;
- enable transfer of the command(s) from the ground or home segment to the field segment; and
- receive the selected data blocks from the field segment for storage in a home data archive to enable delivery of a sensor data product to end-users.

14. A computer program (125; 145) for managing, when executed by a processor (110), sensor data collected and registered by a remote sensing system at a remote field location, referred to as a field segment, wherein the remote sensing system is a satellite-based remote sensing system or the remote sensing is performed by Unmanned Aerial Vehicles (UAVs), and enabling downlinking of sensor data to a separate location, referred to as a ground or home segment, wherein the computer program comprises instructions, which when executed by the processor (110), cause the processor (110) to:
- format and store sensor data in data blocks in a field data archive together with associated metadata describing the collected sensor data, wherein each data block has a corresponding data block identifier in the field data archive;
- generate a sensor data product for preview, referred to as an overview, from the sensor data stored in data blocks in the field data archive, wherein the generated overview is a data product with lower data density than the original sensor data;
- enable downlinking of the overview together with corresponding data block identifiers and associated metadata to the ground or home segment to enable a ground-based process where data blocks, representing a selected subset of sensor data, are selected for transfer based on the content of the overview and/or the associated metadata;
- receive command(s) from the ground or home segment requesting transfer of selected data blocks by their data block identifiers to the home segment; and
- enable transfer of the selected data blocks to the ground or home segment for storage in a home data archive to enable delivery of a sensor data product to end-users.

15. A computer program (125; 145) for requesting, when executed by a processor (110), sensor data from a remote sensing system at a remote field location, referred to as a field segment, wherein the remote sensing system is a satellite-based remote sensing system or the remote sensing is performed by Unmanned Aerial Vehicles (UAVs), to a separate location, referred to as a ground or home segment, wherein the computer program comprises instructions, which when executed by the processor (110), cause the processor (110) to:
- receive a sensor data product for preview, referred to as an overview, generated from sensor data collected by the remote sensing system, together with corresponding data block identifiers and associated metadata describing the collected sensor data, wherein the data block identifiers represent data blocks of sensor data stored in a field data archive in the field segment;
- generate command(s) requesting transfer of selected data blocks by their data block identifiers from the field segment to the ground or home segment, wherein the selected data blocks represent a selected subset of sensor data;
- enable transfer of the command(s) from the ground or home segment to the field segment; and
- receive the selected data blocks from the field segment for storage in a home data archive to enable delivery of a sensor data product to end-users.

## Patentansprüche

1. Verfahren zum Verwalten von Sensordaten, die durch ein Fernmesssystem an einem Fernfeldstandort, der als ein Feldsegment (10) bezeichnet wird, erfasst und registriert werden, wobei das Fernmesssystem ein satellitenbasiertes Fernmesssystem ist oder die Fernmessung durch unbemannte Luftfahrzeuge (UAVs) durchgeführt wird, und zum Downlinken von Sensordaten an einen separaten Standort, der als ein Boden- oder Heimsegment (20) bezeichnet wird, wobei das Verfahren die folgenden Schritte umfasst:
- Formatieren und Speichern (S1) von Sensordaten in Datenblöcken in einem Felddatenarchiv zusammen mit zugehörigen Metadaten, die die erfassten Sensordaten beschreiben, wobei jeder Datenblock eine entsprechende Datenblockkennung in dem Felddatenarchiv aufweist;
- Generieren (S2) eines Sensordatenprodukts zur Vorschau, das als ein Überblick bezeichnet wird, aus den Sensordaten, die in dem Felddatenarchiv in Datenblöcken gespeichert sind, wobei der generierte Überblick ein Datenprodukt mit einer geringeren Datendichte als die ursprünglichen Sensordaten ist;
- Downlinken (S3) des Überblicks zusammen mit den entsprechenden Datenblockkennungen und den zugehörigen Metadaten an das Boden-oder Heimsegment, um einen bodenbasierten Prozess zu ermöglichen, bei dem Datenblöcke, die eine ausgewählte Teilmenge von Sensordaten darstellen, auf Grundlage des Inhalts des Überblicks und/oder der zugehörigen Metadaten zur Übertragung ausgewählt werden;
- Empfangen (S4) von einem Befehl/Befehlen von dem Boden- oder Heimsegment, der/die eine Übertragung von ausgewählten Datenblöcken über deren Datenblockkennungen an das Heimsegment anfordert/anfordern; und
- Übertragen (S5) der ausgewählten Datenblöcke an das Boden- oder Heimsegment zur Speicherung in einem Heimdatenarchiv, um das Liefern eines Sensordatenprodukts an Endnutzer zu ermöglichen.

2. Verfahren zum Anfordern von Sensordaten von einem Fernmesssystem an einem Fernfeldstandort, der als ein Feldsegment (10) bezeichnet wird, wobei das Fernmesssystem ein satellitenbasiertes Fernmesssystem ist oder die Fernmessung durch unbemannte Luftfahrzeuge (UAVs) durchgeführt wird, an einen separaten Standort, der als ein Boden- oder Heimsegment (20) bezeichnet wird, wobei das Verfahren die folgenden Schritte umfasst:
- Empfangen (S11) eines Sensordatenprodukts zur Vorschau, das als ein Überblick bezeichnet und aus Sensordaten generiert wird, die durch das Fernmesssystem erfasst werden, zusammen mit entsprechenden Datenblockkennungen und zugehörigen Metadaten, die die erfassten Sensordaten beschreiben, wobei die Datenblockkennungen Datenblöcke von Sensordaten darstellen, die in einem Felddatenarchiv in dem Feldsegment gespeichert sind, und wobei der Überblick eine geringere Datendichte als die ursprünglichen Sensordaten aufweist;
- Generieren (S12) von einem Befehl/Befehlen, der/die eine Übertragung von ausgewählten Datenblöcken über deren Datenblockkennungen von dem Feldsegment an das Boden- oder Heimsegment anfordert/anfordern, wobei die ausgewählten Datenblöcke eine ausgewählte Teilmenge von Sensordaten darstellen;
- Senden (S13) des Befehls/der Befehle von dem Boden-oder Heimsegment an das Feldsegment; und
- Empfangen (S14) der ausgewählten Datenblöcke von dem Feldsegment zur Speicherung in einem Heimdatenarchiv, um das Liefern eines Sensordatenprodukts an Endnutzer zu ermöglichen.

3. Verfahren nach Anspruch 1 oder 2, wobei die Sensordaten Darstellungen von Erdbeobachtungen, astronomischen Beobachtungen, Radarabtastungen oder CCTV-Daten beinhalten.

4. Verfahren nach einem der Ansprüche 1 bis 3, wobei die Metadaten Informationen über Sensoreinstellungen und- status, Sensorposition und -ausrichtung und/oder Umgebungsbedingungen beinhalten und/oder die Metadaten Informationen über Sensoraufnahmeparameter beinhalten und/oder die Metadaten dazu beitragen, Sensordaten in Raum und Zeit zu lokalisieren, und/oder die Metadaten Schätzungen zur Position, Ausrichtung und Einstellung des Sensors zum Zeitpunkt der Datenerfassung beinhalten.

5. Verfahren nach einem der Ansprüche 1 bis 4, wobei der Befehl/die Befehle zum Anfordern ausgewählter Datenblöcke eine Liste von Datenblöcken zum Herunterladen und/oder eine Liste von Datenblöcken zum Löschen beinhaltet/beinhalten und/oder der Befehl/die Befehle zum Anfordern ausgewählter Datenblöcke Datenblockanforderungsargumente beinhaltet/beinhalten und wobei die Datenblockanforderungsargumente die Sensorkanäle, die beinhaltet sein sollen, die Auflösung und die Blockkennung beinhalten.

6. Verfahren nach Anspruch 1, wobei die Überblicke und/oder zugehörigen Metadaten es einem Agenten, der sich von dem Messsystem entfernt befindet, ermöglichen auszuwählen, welche Daten an das Heimsegment übertragen werden sollen, die Reihenfolge, in der die Daten an das Heimsegment übertragen werden sollen, zu priorisieren und/oder zu entscheiden, in welcher Auflösung Sensordaten übertragen werden sollen.

7. Verfahren nach Anspruch 1, wobei beim Erstellen von Überblicken und Datenblöcken, die Datenverarbeitung für ein ausgewähltes Ergiebigkeits- und Verarbeitungsniveau konfiguriert ist und die Konfigurationsparameter zum Erstellen von Überblicken und/oder Datenblöcken mindestens eines von Quelldatendichte, Bildauflösung, Metadateninklusion, Überlagern von Datenschichten, Zeitintervall, abgebildetem geografischen Bereich, Segment der Umlaufbahn, in dem die Daten erfasst wurden, Zeitintervall, in dem die Daten erfasst wurden, Segment des Spektrums, d. h. der Farbe, oder Sensorkopf beinhalten.

8. Verfahren nach Anspruch 2, wobei das Heimsegment eine Eingabe von einem Agenten empfängt und eine Befehlssequenz generiert, um das Feldsegment zu steuern, um von dem Agenten befohlene Handlungen durchzuführen, und wobei der Agent ein Computersystem in dem Heimsegment mit automatischer Erkennung von Daten ist, die wolkenbedeckten Bereichen in den Sensordaten entsprechen, wodurch ermöglicht wird, dass Daten, die Bereichen mit erkannten Wolken entsprechen, durch automatische Entscheidungen des Agenten in dem Heimsegment aus dem Felddatenarchiv gelöscht werden, oder wobei ein Agent zur Wolkenerkennung in dem Feldsegment beinhaltet ist, was ein automatisches Bereinigen oder Markieren von Daten, die wolkigen Bereichen entsprechen, direkt in dem Feldsegment möglich macht.

9. System (10; 100) zum Verwalten von Sensordaten, die durch ein Fernmesssystem an einem Fernfeldstandort, der als ein Feldsegment (10) bezeichnet wird, erfasst und registriert werden, wobei das Fernmesssystem ein satellitenbasiertes Fernmesssystem ist oder die Fernmessung durch unbemannte Luftfahrzeuge (UAVs) durchgeführt wird, und zum Downlinken von Sensordaten an einen separaten Standort, der als ein Boden- oder Heimsegment (20) bezeichnet wird, wobei das System zu Folgendem konfiguriert ist:
- Formatieren und Speichern von Sensordaten in Datenblöcken in einem Felddatenarchiv zusammen mit zugehörigen Metadaten, die die erfassten Sensordaten beschreiben, wobei jeder Datenblock eine entsprechende Datenblockkennung in dem Felddatenarchiv aufweist;
- Generieren eines Sensordatenprodukts zur Vorschau, das als ein Überblick bezeichnet wird, aus den Sensordaten, die in dem Felddatenarchiv in Datenblöcken gespeichert sind, wobei der generierte Überblick ein Datenprodukt mit einer geringeren Datendichte als die ursprünglichen Sensordaten ist;
- Downlinken des Überblicks zusammen mit den entsprechenden Datenblockkennungen und den zugehörigen Metadaten an das Boden-oder Heimsegment, um einen bodenbasierten Prozess zu ermöglichen, bei dem Datenblöcke, die eine ausgewählte Teilmenge von Sensordaten darstellen, auf Grundlage des Inhalts des Überblicks und/oder der zugehörigen Metadaten zur Übertragung ausgewählt werden;
- Empfangen von einem Befehl/Befehlen von dem Boden-oder Heimsegment, der/die eine Übertragung von ausgewählten Datenblöcken über deren Datenblockkennungen an das Heimsegment anfordert/anfordern; und
- Übertragen der ausgewählten Datenblöcke an das Boden-oder Heimsegment zur Speicherung in einem Heimdatenarchiv, um das Liefern eines Sensordatenprodukts an Endnutzer zu ermöglichen.

10. System (20; 100) zum Anfordern von Sensordaten von einem Fernmesssystem an einem Fernfeldstandort, der als ein Feldsegment (10) bezeichnet wird, wobei das Fernmesssystem ein satellitenbasiertes Fernmesssystem ist oder die Fernmessung durch unbemannte Luftfahrzeuge (UAVs) durchgeführt wird, an einen separaten Standort, der als ein Boden- oder Heimsegment (20) bezeichnet wird, wobei das System zu Folgendem konfiguriert ist:
- Empfangen eines Sensordatenprodukts zur Vorschau, das als ein Überblick bezeichnet und aus Sensordaten generiert wird, die durch das Fernmesssystem erfasst werden, zusammen mit entsprechenden Datenblockkennungen und zugehörigen Metadaten, die die erfassten Sensordaten beschreiben, wobei die Datenblockkennungen Datenblöcke von Sensordaten darstellen, die in einem Felddatenarchiv in dem Feldsegment gespeichert sind;
- Generieren von einem Befehl/Befehlen, der/die eine Übertragung von ausgewählten Datenblöcken über deren Datenblockkennungen von dem Feldsegment an das Boden- oder Heimsegment anfordert/anfordern, wobei die ausgewählten Datenblöcke eine ausgewählte Teilmenge von Sensordaten darstellen;
- Senden des Befehls/der Befehle von dem Boden-oder Heimsegment an das Feldsegment; und
- Empfangen der ausgewählten Datenblöcke von dem Feldsegment zur Speicherung in einem Heimdatenarchiv, um das Liefern eines Sensordatenprodukts an Endnutzer zu ermöglichen.

11. System nach Anspruch 9 oder 10, wobei die Metadaten dazu beitragen, Sensordaten in Raum und Zeit zu lokalisieren, und/oder die Metadaten Schätzungen zur Position, Ausrichtung und Einstellung des Sensors zum Zeitpunkt der Datenerfassung beinhalten.

12. Elektronische Schaltung, die dazu konfiguriert ist, Sensordaten zu verwalten, die durch ein Fernmesssystem an einem Fernfeldstandort, der als ein Feldsegment bezeichnet wird, erfasst und registriert werden, wobei das Fernmesssystem ein satellitenbasiertes Fernmesssystem ist oder die Fernmessung durch unbemannte Luftfahrzeuge (UAVs) durchgeführt wird, und die das Downlinken von Sensordaten an einen separaten Standort ermöglicht, der als ein Boden- oder Heimsegment bezeichnet wird, wobei die elektronische Schaltung zu Folgendem konfiguriert ist:
- Formatieren und Speichern von Sensordaten in Datenblöcken in einem Felddatenarchiv zusammen mit zugehörigen Metadaten, die die erfassten Sensordaten beschreiben, wobei jeder Datenblock eine entsprechende Datenblockkennung in dem Felddatenarchiv aufweist;
- Generieren eines Sensordatenprodukts zur Vorschau, das als ein Überblick bezeichnet wird, aus den Sensordaten, die in dem Felddatenarchiv in Datenblöcken gespeichert sind, wobei der generierte Überblick ein Datenprodukt mit einer geringeren Datendichte als die ursprünglichen Sensordaten ist;
- Ermöglichen von Downlinken des Überblicks zusammen mit den entsprechenden Datenblockkennungen und den zugehörigen Metadaten an das Boden- oder Heimsegment, um einen bodenbasierten Prozess zu ermöglichen, bei dem Datenblöcke, die eine ausgewählte Teilmenge von Sensordaten darstellen, auf Grundlage des Inhalts des Überblicks und/oder der zugehörigen Metadaten zur Übertragung ausgewählt werden;
- Empfangen von einem Befehl/Befehlen von dem Boden-oder Heimsegment, der/die eine Übertragung von ausgewählten Datenblöcken über deren Datenblockkennungen an das Heimsegment anfordert/anfordern; und
- Ermöglichen der Übertragung der ausgewählten Datenblöcke an das Boden- oder Heimsegment zur Speicherung in einem Heimdatenarchiv, um das Liefern eines Sensordatenprodukts an Endnutzer zu ermöglichen.

13. Elektronische Schaltung, die dazu konfiguriert ist, Sensordaten von einem Fernmesssystem an einem Fernfeldstandort, der als ein Feldsegment bezeichnet wird, wobei das Fernmesssystem ein satellitenbasiertes Fernmesssystem ist oder die Fernmessung durch unbemannte Luftfahrzeuge (UAVs) durchgeführt wird, an einen separaten Standort anzufordern, der als ein Boden- oder Heimsegment bezeichnet wird, wobei die elektronische Schaltung zu Folgendem konfiguriert ist:
- Empfangen eines Sensordatenprodukts zur Vorschau, das als ein Überblick bezeichnet und aus Sensordaten generiert wird, die durch das Fernmesssystem erfasst werden, zusammen mit entsprechenden Datenblockkennungen und zugehörigen Metadaten, die die erfassten Sensordaten beschreiben, wobei die Datenblockkennungen Datenblöcke von Sensordaten darstellen, die in einem Felddatenarchiv in dem Feldsegment gespeichert sind;
- Generieren von einem Befehl/Befehlen, der/die eine Übertragung von ausgewählten Datenblöcken über deren Datenblockkennungen von dem Feldsegment an das Boden- oder Heimsegment anfordert/anfordern, wobei die ausgewählten Datenblöcke eine ausgewählte Teilmenge von Sensordaten darstellen;
- Ermöglichen der Übertragung des Befehls/der Befehle von dem Boden- oder Heimsegment an das Feldsegment; und
- Empfangen der ausgewählten Datenblöcke von dem Feldsegment zur Speicherung in einem Heimdatenarchiv, um das Liefern eines Sensordatenprodukts an Endnutzer zu ermöglichen.

14. Computerprogramm (125; 145), das, bei Ausführung durch einen Prozessor (110), dem Anfordern von Sensordaten von einem Fernmesssystem an einem Fernfeldstandort, der als ein Feldsegment bezeichnet wird, wobei das Fernmesssystem ein satellitenbasiertes Fernmesssystem ist oder die Fernmessung durch unbemannte Luftfahrzeuge (UAVs) durchgeführt wird, an einen separaten Standort dient, der als ein Boden- oder Heimsegment bezeichnet wird, wobei das Computerprogramm Anweisungen umfasst, die, bei Ausführung durch den Prozessor (110), den Prozessor (110) zu Folgendem veranlassen:
- Formatieren und Speichern von Sensordaten in Datenblöcken in einem Felddatenarchiv zusammen mit zugehörigen Metadaten, die die erfassten Sensordaten beschreiben, wobei jeder Datenblock eine entsprechende Datenblockkennung in dem Felddatenarchiv aufweist;
- Generieren eines Sensordatenprodukts zur Vorschau, das als ein Überblick bezeichnet wird, aus den Sensordaten, die in dem Felddatenarchiv in Datenblöcken gespeichert sind, wobei der generierte Überblick ein Datenprodukt mit einer geringeren Datendichte als die ursprünglichen Sensordaten ist;
- Ermöglichen von Downlinken des Überblicks zusammen mit den entsprechenden Datenblockkennungen und den zugehörigen Metadaten an das Boden- oder Heimsegment, um einen bodenbasierten Prozess zu ermöglichen, bei dem Datenblöcke, die eine ausgewählte Teilmenge von Sensordaten darstellen, auf Grundlage des Inhalts des Überblicks und/oder der zugehörigen Metadaten zur Übertragung ausgewählt werden;
- Empfangen von einem Befehl/Befehlen von dem Boden-oder Heimsegment, der/die eine Übertragung von ausgewählten Datenblöcken über deren Datenblockkennungen an das Heimsegment anfordert/anfordern; und
- Ermöglichen der Übertragung der ausgewählten Datenblöcke an das Boden- oder Heimsegment zur Speicherung in einem Heimdatenarchiv, um das Liefern eines Sensordatenprodukts an Endnutzer zu ermöglichen.

15. Computerprogramm (125; 145), das, bei Ausführung durch einen Prozessor (110), dem Anfordern von Sensordaten von einem Fernmesssystem an einem Fernfeldstandort, der als ein Feldsegment bezeichnet wird, wobei das Fernmesssystem ein satellitenbasiertes Fernmesssystem ist oder die Fernmessung durch unbemannte Luftfahrzeuge (UAVs) durchgeführt wird, an einen separaten Standort dient, der als ein Boden- oder Heimsegment bezeichnet wird, wobei das Computerprogramm Anweisungen umfasst, die bei Ausführung durch den Prozessor (110) den Prozessor (110) zu Folgendem veranlassen:
- Empfangen eines Sensordatenprodukts zur Vorschau, das als ein Überblick bezeichnet und aus Sensordaten generiert wird, die durch das Fernmesssystem erfasst werden, zusammen mit entsprechenden Datenblockkennungen und zugehörigen Metadaten, die die erfassten Sensordaten beschreiben, wobei die Datenblockkennungen Datenblöcke von Sensordaten darstellen, die in einem Felddatenarchiv in dem Feldsegment gespeichert sind;
- Generieren von einem Befehl/Befehlen, der/die eine Übertragung von ausgewählten Datenblöcken über deren Datenblockkennungen von dem Feldsegment an das Boden- oder Heimsegment anfordert/anfordern, wobei die ausgewählten Datenblöcke eine ausgewählte Teilmenge von Sensordaten darstellen;
- Ermöglichen von Übertragen des Befehls/der Befehle von dem Boden- oder Heimsegment an das Feldsegment; und
- Empfangen der ausgewählten Datenblöcke von dem Feldsegment zur Speicherung in einem Heimdatenarchiv, um das Liefern eines Sensordatenprodukts an Endnutzer zu ermöglichen.

## Revendications

1. Procédé pour gérer des données de capteur collectées et enregistrées par un système de détection à distance à un emplacement de champ à distance, appelé segment de champ (10), dans lequel le système de détection à distance est un système de détection à distance par satellite ou la détection à distance est effectuée par des véhicules aériens sans pilote (UAV), et transmettre les données de capteur sur liaison descendante jusqu'à un emplacement séparé, appelé segment sol ou domestique (20), dans lequel le procédé comprend les étapes de :
- formatage et stockage (S1) des données de capteur dans des blocs de données dans une archive de données de champ conjointement avec des métadonnées associées décrivant les données de capteur collectées, dans lequel chaque bloc de données a un identifiant de bloc de données correspondant dans l'archive de données de champ ;
- génération (S2) d'un produit de données de capteur pour une pré-visualisation, appelée aperçu, à partir des données de capteur stockées dans des blocs de données dans l'archive de données de champ, dans lequel l'aperçu généré est un produit de données présentant une densité de données inférieure à celle des données de capteur d'origine ;
- transmission de l'aperçu sur liaison descendante (S3) conjointement avec les identifiants de blocs de données correspondants et les métadonnées associées jusqu'au segment sol ou domestique pour permettre un processus au sol dans lequel les blocs de données, représentant un sous-ensemble sélectionné de données de capteur, sont sélectionnés pour un transfert sur la base du contenu de l'aperçu et/ou des métadonnées associées ;
- réception (S4) d'une ou de plusieurs commandes à partir du segment sol ou domestique demandant le transfert des blocs de données sélectionnés par leurs identifiants de blocs de données vers le segment domestique ; et
- transfert (S5) des blocs de données sélectionnés vers le segment sol ou domestique pour être stockés dans une archive de données domestique pour permettre la fourniture d'un produit de données de capteur aux utilisateurs finaux.

2. Procédé pour demander des données de capteur d'un système de détection à distance à un emplacement de champ à distance, appelé segment de champ (10), dans lequel le système de détection à distance est un système de détection à distance par satellite ou la détection à distance est effectuée par des véhicules aériens sans pilote (UAV), à un emplacement séparé, appelé segment sol ou domestique (20), dans lequel le procédé comprend les étapes :
- de réception (S11) d'un produit de données de capteur pour une pré-visualisation, appelée aperçu, généré à partir des données de capteur collectées par le système de détection à distance, conjointement avec des identifiants de blocs de données correspondants et des métadonnées associées décrivant les données de capteur collectées, dans lequel les identifiants de blocs de données représentent des blocs de données de données de capteur stockés dans une archive de données de champ dans le segment de champ, et dans lequel l'aperçu présente une densité de données inférieure à celle des données de capteur d'origine ;
- de génération (S12) d'une ou plusieurs commandes demandant le transfert des blocs de données sélectionnés par leurs identifiants de blocs de données du segment de champ au segment sol ou domestique, dans lequel les blocs de données sélectionnés représentent un sous-ensemble sélectionné de données de capteur ;
- d'envoi (S13) des une ou plusieurs commandes du segment sol ou domestique au segment de champ ; et
- de réception (S14) des blocs de données sélectionnés à partir du segment de champ pour les stocker dans une archive de données domestique pour permettre la fourniture d'un produit de données de capteur aux utilisateurs finaux.

3. Procédé selon la revendication 1 ou 2, dans lequel les données de capteur comportent des représentations des observations de la terre, des observations astronomiques, des balayages radar ou des données CCTV.

4. Procédé selon l'une quelconque des revendications 1 à 3, dans lequel les métadonnées comportent des informations sur les réglages et l'état du capteur, la position et l'orientation du capteur et/ou les conditions ambiantes, et/ou les métadonnées comportent des informations sur les paramètres d'acquisition de capteur et/ou les métadonnées contribuent à localiser les données de capteur dans l'espace et le temps, et/ou les métadonnées comportent des estimations de position, d'orientation et de réglage du capteur au moment de la collecte des données.

5. Procédé selon l'une quelconque des revendications 1 à 4, dans lequel la ou les commandes pour demander des blocs de données sélectionnés comportent une liste de blocs de données à télécharger et/ou une liste de blocs de données à supprimer, et/ou la ou les commandes pour demander des blocs de données sélectionnés comportent des arguments de demandes de blocs de données, et les arguments de demandes de blocs de données comportent des canaux de capteur à inclure, une résolution et un identifiant de bloc.

6. Procédé selon la revendication 1, dans lequel les aperçus et/ou les métadonnées associées permettent à un agent situé à distance du système de détection de sélectionner quelles données devraient être transférées vers le segment domestique, d'établir l'ordre dans lequel les données devraient être transférées vers le segment domestique et/ou de décider dans quelle résolution les données de capteur devraient être transférées.

7. Procédé selon la revendication 1, dans lequel, lors de la préparation d'aperçus et de blocs de données, le traitement de données est configuré à un niveau de richesse et de traitement sélectionné, et les paramètres de configuration pour préparer des aperçus et/ou des blocs de données comportent au moins l'un parmi une densité de données source, une résolution d'image, l'inclusion de métadonnées, la superposition de couches de données, un intervalle de temps, une zone géographique représentée, un segment d'orbite où les données ont été collectées, un intervalle de temps pendant lequel les données ont été collectées, un segment du spectre, c'est-à-dire la couleur, ou une tête de capteur.

8. Procédé selon la revendication 2, dans lequel le segment domestique reçoit une entrée d'un agent et génère une séquence de commandes pour commander le segment de champ afin d'exécuter les actions commandées par l'agent, et l'agent est un système informatique dans le segment domestique avec détection automatique des données correspondant aux zones couvertes de nuages dans les données de capteur, permettant aux données correspondant aux zones avec des nuages détectés d'être supprimées de l'archive de données de champ par des décisions automatiques de l'agent dans le segment domestique, ou un agent de détection de nuages est inclus dans le segment de champ, permettant ainsi d'automatiser le nettoyage ou le marquage des données correspondant aux zones nuageuses directement dans le segment de champ.

9. Système (10 ; 100) pour gérer des données de capteur collectées et enregistrées par un système de détection à distance à un emplacement de champ à distance, appelé segment de champ (10), dans lequel le système de détection à distance est un système de détection à distance par satellite ou la détection à distance est effectuée par des véhicules aériens sans pilote (UAV), et transmettre les données de capteur sur liaison descendante jusqu'à un emplacement séparé, appelé segment sol ou domestique (20), dans lequel le système est configuré pour :
- formater et stocker des données de capteur dans des blocs de données dans une archive de données de champ conjointement avec des métadonnées associées décrivant les données de capteur collectées, dans lequel chaque bloc de données a un identifiant de bloc de données correspondant dans l'archive de données de champ ;
- générer un produit de données de capteur pour une pré-visualisation, appelée aperçu, à partir des données de capteur stockées dans des blocs de données dans l'archive de données de champ, dans lequel l'aperçu généré est un produit de données présentant une densité de données inférieure à celle des données de capteur d'origine ;
- transmettre l'aperçu sur liaison descendante conjointement avec les identifiants de blocs de données correspondants et les métadonnées associées jusqu'au segment sol ou domestique pour permettre un processus au sol où les blocs de données, représentant un sous-ensemble sélectionné de données de capteur, sont sélectionnés pour un transfert sur la base du contenu de l'aperçu et/ou des métadonnées associées ;
- recevoir une ou plusieurs commandes du segment sol ou domestique demandant le transfert des blocs de données sélectionnés par leurs identifiants de blocs de données au segment domestique ; et
- transférer les blocs de données sélectionnés au segment sol ou domestique pour être stockés dans une archive de données domestique pour permettre la fourniture d'un produit de données de capteur aux utilisateurs finaux.

10. Système (20 ; 100) pour demander des données de capteur d'un système de détection à distance à un emplacement de champ à distance, appelé segment de champ (10), dans lequel le système de détection à distance est un système de détection à distance par satellite ou la détection à distance est effectuée par des véhicules aériens sans pilote (UAV), à un emplacement séparé, appelé segment sol ou domestique (20), dans lequel le système est configuré pour :
- recevoir un produit de données de capteur pour une pré-visualisation, appelée aperçu, généré à partir des données de capteur collectées par le système de détection à distance, conjointement avec des identifiants de blocs de données correspondants et des métadonnées associées décrivant les données de capteur collectées, dans lequel les identifiants de blocs de données représentent des blocs de données de données de capteur stockés dans une archive de données de champ dans le segment de champ ;
- générer une ou plusieurs commandes demandant le transfert des blocs de données sélectionnés par leurs identifiants de blocs de données du segment de champ jusqu'au segment sol ou domestique, dans lequel les blocs de données sélectionnés représentent un sous-ensemble sélectionné de données de capteur ;
- envoyer la ou les commandes du segment sol ou domestique jusqu'au segment de champ ; et
- recevoir les blocs de données sélectionnés du segment de champ pour être stockés dans une archive de données domestique pour permettre la fourniture d'un produit de données de capteur aux utilisateurs finaux.

11. Système selon la revendication 9 ou 10, dans lequel les métadonnées contribuent à localiser des données de capteur dans l'espace et le temps, et/ou les métadonnées comportent des estimations de position, d'orientation et de réglage du capteur au moment de la collecte de données.

12. Circuit électronique configuré pour gérer les données de capteur collectées et enregistrées par un système de détection à distance à un emplacement de champ à distance, appelé segment de champ, dans lequel le système de détection à distance est un système de détection à distance par satellite ou la détection à distance est effectuée par des véhicules aériens sans pilote (UAV), et permettant la transmission des données de capteur sur liaison descendante jusqu'à un emplacement séparé, appelé segment sol ou domestique, dans lequel le circuit électronique est configuré pour :
- formater et stocker des données de capteur dans des blocs de données dans une archive de données de champ conjointement avec des métadonnées associées décrivant les données de capteur collectées, dans lequel chaque bloc de données a un identifiant de bloc de données correspondant dans l'archive de données de champ ;
- générer un produit de données de capteur pour une pré-visualisation, appelée aperçu, à partir des données de capteur stockées dans des blocs de données dans l'archive de données de champ, dans lequel l'aperçu généré est un produit de données présentant une densité de données inférieure à celle des données de capteur d'origine ;
- permettre la transmission de l'aperçu sur liaison descendante conjointement avec les identifiants de blocs de données correspondants et les métadonnées associées jusqu'au segment sol ou domestique pour permettre un processus au sol où les blocs de données, représentant un sous-ensemble sélectionné de données de capteur, sont sélectionnés pour un transfert sur la base du contenu de l'aperçu et/ou des métadonnées associées ;
- recevoir une ou plusieurs commandes du segment sol ou domestique demandant le transfert des blocs de données sélectionnés par leurs identifiants de blocs de données jusqu'au segment domestique ; et
- permettre le transfert des blocs de données sélectionnés jusqu'au segment sol ou domestique pour être stockés dans une archive de données domestique pour permettre la fourniture d'un produit de données de capteur aux utilisateurs finaux.

13. Circuit électronique configuré pour demander des données de capteur d'un système de détection à distance à un emplacement de champ à distance, appelé segment de champ, dans lequel le système de détection à distance est un système de détection à distance par satellite ou la détection à distance est effectuée par des véhicules aériens sans pilote (UAV), à un emplacement séparé, appelé segment sol ou domestique, dans lequel le circuit électronique est configuré pour :
- recevoir un produit de données de capteur pour une pré-visualisation, appelée aperçu, généré à partir des données de capteur collectées par le système de détection à distance, conjointement avec des identifiants de blocs de données correspondants et des métadonnées associées décrivant les données de capteur collectées, dans lequel les identifiants de blocs de données représentent des blocs de données de données de capteur stockés dans une archive de données de champ dans le segment de champ ;
- générer une ou plusieurs commandes demandant le transfert des blocs de données sélectionnés par leurs identifiants de blocs de données du segment de champ jusqu'au segment sol ou domestique, dans lequel les blocs de données sélectionnés représentent un sous-ensemble sélectionné de données de capteur ;
- permettre le transfert des une ou plusieurs commandes du segment sol ou domestique jusqu'au segment de champ ; et
- recevoir les blocs de données sélectionnés du segment de champ pour être stockés dans une archive de données domestique pour permettre la fourniture d'un produit de données de capteur aux utilisateurs finaux.

14. Programme informatique (125 ; 145) pour gérer, lorsqu'il est exécuté par un processeur (110), des données de capteur collectées et enregistrées par un système de détection à distance à un emplacement de champ à distance, appelé segment de champ, dans lequel le système de détection à distance est un système de détection à distance par satellite ou la détection à distance est effectuée par des véhicules aériens sans pilote (UAV), et permettant la transmission des données de capteur sur liaison descendante jusqu'à un emplacement séparé, appelé segment sol ou domestique, dans lequel le programme informatique comprend des instructions, qui, lorsqu'elles sont exécutées par le processeur (110), amènent le processeur (110) à :
- formater et stocker des données de capteur dans des blocs de données dans une archive de données de champ conjointement avec des métadonnées associées décrivant les données de capteur collectées, dans lequel chaque bloc de données a un identifiant de bloc de données correspondant dans l'archive de données de champ ;
- générer un produit de données de capteur pour une pré-visualisation, appelée aperçu, à partir des données de capteur stockées dans des blocs de données dans l'archive de données de champ, dans lequel l'aperçu généré est un produit de données présentant une densité de données inférieure à celle des données de capteur d'origine ;
- permettre la transmission de l'aperçu sur liaison descendante conjointement avec les identifiants de blocs de données correspondants et les métadonnées associées jusqu'au segment sol ou domestique pour permettre un processus au sol où les blocs de données, représentant un sous-ensemble sélectionné de données de capteur, sont sélectionnés pour un transfert sur la base du contenu de l'aperçu et/ou des métadonnées associées ;
- recevoir une ou plusieurs commandes du segment sol ou domestique demandant le transfert des blocs de données sélectionnés par leurs identifiants de blocs de données jusqu'au segment domestique ; et
- permettre le transfert des blocs de données sélectionnés jusqu'au segment sol ou domestique pour être stockés dans une archive de données domestique pour permettre la fourniture d'un produit de données de capteur aux utilisateurs finaux.

15. Programme informatique (125 ; 145) pour demander, lorsqu'il est exécuté par un processeur (110), des données de capteur d'un système de détection à distance à un emplacement de champ à distance, appelé segment de champ, dans lequel le système de détection à distance est un système de détection à distance par satellite ou la détection à distance est effectuée par des véhicules aériens sans pilote (UAV), à un emplacement séparé, appelé segment sol ou domestique, dans lequel le programme informatique comprend des instructions qui, lorsqu'elles sont exécutées par le processeur (110), amènent le processeur (110) à :
- recevoir un produit de données de capteur pour une pré-visualisation, appelée aperçu, généré à partir des données de capteur collectées par le système de détection à distance, conjointement avec des identifiants de blocs de données correspondants et des métadonnées associées décrivant les données de capteur collectées, dans lequel les identifiants de blocs de données représentent des blocs de données de données de capteur stockés dans une archive de données de champ dans le segment de champ ;
- générer une ou plusieurs commandes demandant le transfert des blocs de données sélectionnés par leurs identifiants de blocs de données du segment de champ jusqu'au segment sol ou domestique, dans lequel les blocs de données sélectionnés représentent un sous-ensemble sélectionné de données de capteur ;
- permettre le transfert des une ou plusieurs commandes du segment sol ou domestique jusqu'au segment de champ ; et
- recevoir les blocs de données sélectionnés du segment de champ pour être stockés dans une archive de données domestique pour permettre la fourniture d'un produit de données de capteur aux utilisateurs finaux.
